# EUROPÄISCHE PATENTSCHRIFT

(11) **EP 1 525 241 B1**
(45) Veröffentlichungstag und Bekanntmachung des Hinweises auf die Patenterteilung: **12.11.2008**
(21) Anmeldenummer: 03735549.2
(22) Anmeldetag: 05.06.2003
(51) Int. Cl.: C08G 18/08, C08G 18/62

(54) **STRUKTURVISKOSE KLARLACK-SLURRY, VERFAHREN ZU IHRER HERSTELLUNG UND IHRE VERWENDUNG**
STRUCTURALLY VISCOUS CLEAR LACQUER SLURRY, METHOD FOR THE PRODUCTION THEREOF, AND USE THEREOF
SUSPENSION DE VERNIS CLAIR A VISCOSITE INTRINSEQUE, PROCEDE POUR LA PRODUIRE ET SON UTILISATION

(30) Priorität: 31.07.2002 DE 10234792
(43) Veröffentlichungstag der Anmeldung: 27.04.2005
(73) Patentinhaber: BASF Coatings AG, 48165 Münster (DE)
(72) Erfinder: FLORACK, Heike, 48565 Steinfurt (DE); RÖCKRATH, Ulrike, 48308 Senden (DE); BÖHMER, Ute, 22045 Hamburg (DE); TECKLENBORG, Michael, 48317 Drensteinfurt (DE); WOLTERING, Joachim, 48159 Münster (DE); GIESEN, Bianca, 59065 Hamm (DE)
(74) Vertreter: Leifert, Elmar
(86) Internationale Anmeldenummer: PCT/EP2003/005888
(87) Internationale Veröffentlichungsnummer: WO 2004/018537

(56) Entgegenhaltungen:
- DE-A- 19 741 554
- DE-A- 19 846 650

## Beschreibung

Die vorliegende Erfindung betrifft eine neue strukturviskose Klarlack-Slurry. Außerdem betrifft die vorliegende Erfindung ein neues Verfahren zur Herstellung strukturviskoser Klarlack-Slurries. Desweiteren betrifft die vorliegende Erfindung die Verwendung der neuen strukturviskosen Klarlack-Slurry für die Automobil-erstlackierung, die Automobilreparaturlackierung, die Lackierung von Bauwerken im Innen- und Außenbereich, die Lackierung von Türen, Fenstern und Möbeln sowie die industrielle Lackierung, inklusive Coil Coating, Container Coating, die Kleinteilelackierung, die Imprägnierung und/oder Beschichtung elektrotechnischer Bauteile und Lackierung von weißer Ware. Nicht zuletzt betrifft die vorliegende Erfindung die Verwendung der neuen strukturviskosen Klarlack-Slurries als Klebstoffe und Dichtungsmassen zur Herstellung von Klebschichten und Dichtungen, insbesondere auf den vorstehend genannten Gebieten.

Aus der deutschen Patentanmeldung DE 196 17 086 A1 ist eine Pulverklarlack- Slurry bekannt, die mit Hilfe eine Sekundärdispersionsverfahrens, bei dem die Dispergiervorrichtungen Druckentspannungshomogenisierdüsen enthalten, herstellbar ist. Als Bindemittel kommen Polyhydroxypolyester, Polyhydroxypolycarbonate, Polyhydroxyurethane oder Polyhydroxypolyacrylate in Betracht. Bevorzugt werden Polyester/Polyacrylat-Polyole eingesetzt, bei denen der Polyacrylat-Anteil aus Methylmethacrylat, Styrol, Hydroxyethylmethacrylat, Butylmethacrylat und Acrylsäure hergestellt wird. Vorzugsweise weisen die Partikel der bekannten Klarlack-Slurry mittlere Teilchengröße von 0,23 bis 0,43 µm auf. Es ist notwendig, zur Stabilisierung zusätzlich zu der ionischer Stabilisierung auch noch externe Emulgatoren anzuwenden, welche die Beständigkeit der betreffenden Klarlackierungen gegenüber Wasser und Feuchtigkeit vermindern. Außerdem enthalten diese bekannten Klarlack-Slurries immer gewisse Mengen an organischen Cosolventien oder Verlaufmitteln, die nicht entfernt werden können, weil sie für die Verlaufseigenschaften des angetrockneten Films essentiell sind. Überdies sind zu ihrer Herstellung spezielle Vorrichtungen notwendig. Vor der Applikation der Klarlack-Slurries werden sie mit Hilfe von Verdickern auf die Applikationsviskosität eingestellt; ein komplexes Viskositätsverhalten wird indes nicht beschrieben.

Eine vergleichbare Klarlack-Slurry ist noch aus der europäischen Patentanmeldung EP 0 899 282 A2 bekannt. Die bekannte Klarlack-Slurry kann nach einem Direktdispergierverfahren oder nach dem Phasenumkehrverfahren hergestellt werden. Mit dem Phasenumkehrverfahren ist das nachstehend aufgeführte Sekundärdispersionsverfahren gemeint. Wesentlich ist, daß bei der Herstellung eine Dispergiervorrichtung mit einer volumenbezogenen Dispergierleistung von 1 x 10 bis 9,8 x 10.000 W/cm³ eingesetzt wird. Als Bindemittel kommen hydroxylgruppenhaltige Polyester und Polyacrylate in Betracht. Vorzugsweise werden Methacrylatcopolymerisate aus Methylmethacrylat, Styrol, Hydroxyethylmethacrylat, Butylmethacrylat oder Butylacrylat und Acrylsäure eingesetzt. Die bekannten Klarlack-Slurries benötigen zu ihrer Stabilisierung externe Emulgatoren; ein komplexes Viskositätsverhalten wird nicht beschrieben.

Hier hat die aus dem deutschen Patent DE 198 41 842 C2 bekannte strukturviskose Klarlack-Slurry wesentliche Fortschritte mit sich gebracht.

Die bekannte strukturviskose Klarlack-Slurry ist von organischen Lösemitteln und externen Emulgatoren frei und enthält feste sphärische Partikel einer mittleren Teilchengröße von 0,8 bis 20 µm und einer maximalen Teilchengröße von 30 µm, wobei die Klarlack-Slurry einen Gehalt an lonen bildenden Gruppen von 0,05 bis 1 meq/g, einen Gehalt an Neutralisationsmitteln von 0,05 bis 1 meq/g und eine Viskosität von
(i) 50 bis 1000 mPas bei einer Scherrate von 1.000 s⁻¹,
(ii) 150 bis 8.000 mPas bei einer Scherrate von 10 s⁻¹ und
(iii) 180 bis 12.000 mPas bei einer Scherrate von 1 s⁻¹
aufweist. Als Bindemittel werden Methacrylatcopolymerisate aus tert.-Butylacrylat, n-Butylmethacrylat, Cyclohexylmethacrylat und Hydroxypropylmethacrylat verwendet (vgl. das Herstellungsbeispiel 1, Ziff. 1.1 und 1.2, auf Seite 6, Zeilen 30 bis 63, des Patents).

Die bekannten Klarlack-Slurries werden durch
1) Emulgieren einer organischen Lösung, enthaltend Bindemittel und Vernetzungsmittel, in Wasser wodurch eine Emulsion vom Typ Öl-in-Wasser resultiert,
2) Entfernen des organischen Lösemittels oder der organischen Lösemittel und
3) teilweisen oder völligen Ersatz des entfernten Lösemittelvolumens durch Wasser, wodurch eine Klarlack-Slurry mit festen sphärischen Partikeln resultiert,
   hergestellt, wobei der Klarlack-Slurry
4) noch mindestens ein ionischer, insbesondere anionischer, Verdikker und mindestens ein nicht ionischer Assoziativ-Verdicker zugesetzt werden.

Hier und im folgenden wird das Verfahren gemäß den Verfahrensschritten (1) bis (3) als Sekundärdispersionsverfahren bezeichnet.

Diese strukturviskose Klarlack-Slurry ist mit einer geringen Anzahl an Verarbeitungsschritten herstellbar; dabei weist sie aufgrund ihrer typischen Pulverslurryeigenschaften mit Restlösemittelgehalten von <1% und ihren Partikelgrößen ein vorteilhaftes Applikationsverhalten auf. Bei den geforderten Filmschichtdicken von ca. 40 - 50 µm treten im allgemeinen auch ohne Zuhilfenahme von organischen Lösemitteln keine Kocher auf. Außerdem sind ihre Partikel wegen Vermischung ihrer Bestandteile in Lösung sehr homogen. Die resultierenden Klarlackierungen sind brillant, chemikalienbeständig und von sehr gutem Verlauf ohne Kocher und Rißbildung.

Die strukturviskosen Klarlack-Slurries weisen sehr gute anwendungstechnische Eigenschaften auf und sind sehr gut für die Herstellung von Klarlackierungen für hochwertige farb- und/oder effektgebende Mehrschichtlackierungen geeignet, wie sie beispielsweise für die Beschichtung von Automobilen eingesetzt werden. Dabei können sie bei der Herstellung dieser farb- und/oder effektgebenden Mehrschichtlackierungen nach dem Naß-in-naß-Verfahren in Kombination mit den unterschiedlichsten Wasserbasislacken eingesetzt werden, ohne daß es zu so nachteiligen Effekten wie der Rißbildung (mud-cracking), kommt.

In der deutschen Patentanmeldung DE 100 01 442.9 wird die strukturviskose Klarlack-Slurry des deutschen Patent DE 198 41 842 C2 noch nachträglich einer Naßvermahlung unterworfen.

In der deutschen Patentanmeldung DE 100 55 464.4 wird eine strukturviskose, von organischen Lösemitteln und externen Emulgatoren freie Klarlack-Slurry beschrieben, enthaltend feste und/oder hochviskose, unter Lagerungs- und Anwendungsbedingungen dimensionsstabile Partikel, wobei
1. die Partikel
   1.1 eine mittleren Teilchengröße von 1,0 bis 20 µm aufweisen, wobei mindestens 99% der Partikel eine Teilchengröße ≤30 µm haben, und
   1.2 mindestens ein Polyol einer OH-Zahl >110 mg KOH/g, enthaltend potentiell ionische Gruppen, als Bindemittel enthalten,
   und wobei
2. die Klarlack-Slurry
   2.1 einen Gehalt an potentiell ionischen Gruppen von 0,01 bis 1 meq/g Festkörper,
   2.2 bei einem Neutralisationsgrad von höchstens 50% einen Gehalt an durch Neutralisation der potentiell ionischen Gruppen erzeugten ionischen Gruppen von 0,005 bis 0,1 meq/g Festkörper und
   2.3 eine Viskosität von (i) 50 bis 1000 mPas bei einer Scherrate von 1000 s⁻¹, (ii) 150 bis 8000 mPas bei einer Scherrate von 10 s⁻¹ und (iii) 180 bis 12000 mPas bei einer Scherrate von 1 s⁻¹
aufweist. Als Bindemittel werden auch hier Methacrylatcopolymerisate aus tert.-Butylacrylat, n-Butylmethacrylat, Cyclohexylmethacrylat und Hydroxypropylmethacrylat eingesetzt. Die strukturviskose Klarlack-Slurry kann ebenfalls nach dem Sekundärdispersionsverfahren hergestellt werden.

Die bekannten Klarlack-Slurries auf Basis der Methacrylatcopolymerisate weisen den Nachteil auf, daß sie als Reparaturlackierung nicht geeignet sind. Insbesondere ist nachteilig, daß zur Herstellung einer ausreichenden Haftung die überzulackierende Beschichtung angeschliffen werden muß. Da beim Schleifvorgang nicht alle Stellen des überzulackierenden Objektes in jedem Falle erfaßt werden, besteht nach dem bisherigen Stand der Technik an den nicht angeschliffenen Stellen die Gefahr einer mangelhaften Haftung. Diese Problematik findet sich insbesondere bei der Falz-Reparaturlackierung in der Linie beim Automobilhersteller wieder.

Aufgabe der vorliegenden Erfindung ist es, eine neue strukturviskose Klarlack-Slurry zur Verfügung zu stellen, welche die Nachteile des Standes der Technik nicht mehr länger aufweist, sondern die unter Wahrung aller Vorteile der bekannten strukturviskosen Klarlack-Slurries Klarlackierungen liefert, die keine Mikrostörungen, insbesondere keine störenden optischen Effekte, wie »Sternenhimmel« mehr aufweisen und die darüber hinaus eine verbesserte Haftung auf Erstlackierungen aufweist und damit als Reparaturlackierung, insbesondere für nicht angeschliffene Erstlackierungen, geeignet ist.

Demgemäß wurde die neue strukturviskose Klarlack-Slurry gefunden, enthaltend feste und/oder hochviskose, unter Lagerungs- und Anwendungsbedingungen dimensionsstabile Partikel, die 0 bis 0,07, bevorzugt 0,001 bis 0,06, besonders bevorzugt 0,02 bis 0,05, insbesondere bevorzugt 0,03 bis 0,05 Gew.-% Katalysator, bezogen auf den Gesamtfestkörper der Slurry, und als Bindemittel Methacrylatcopolymerisate mit einer OH-Zahl >150, bevorzugt >170, enthalten, die, bezogen auf ein gegebenes Methacrylatcopolymerisat, mindestens 90 Gew.-% Methacrylatcomonomere, inklusive potentiell ionische Gruppen aufweisende (Meth)Acrylatcomonomere, einpolymerisiert enthalten.

Im folgenden wird die neue, strukturviskose Klarlack-Slurry als "erfindungsgemäße Slurry" bezeichnet.

Weitere Erfindungsgegenstände gehen aus der Beschreibung hervor.

Im Hinblick auf den Stand der Technik war es für den Fachmann überraschend und nicht vorhersehbar, daß die der vorliegenden Erfindung zugrundeliegende Aufgabe dadurch gelöst werden konnte, daß die speziellen Methacrylatcopolymerisate als Bindemittel mit den genannten niedrigen Konzentrationen an Katalysator in den erfindungsgemäßen Slurries eingesetzt wurden. Insbesondere überraschte, daß die erfindungsgemäßen Slurries und die hieraus hergestellten Klarlackierungen dasselbe vorteilhafte Eigenschaftsprofil wie die Klarlack-Slurries und die Klarlackierungen des Standes der Technik aufwiesen, jedoch keine Mikrostörungen mehr bildeten und zugleich ohne Anschleifen der Erstlackierung eine ausreichende Haftung bei Einsatz als Reparaturlackierung aufweisen.

Die erfindungsgemäßen Slurries können physikalisch, thermisch, mit aktinischer Strahlung oder thermisch und mit aktinischer Strahlung (Dual Cure) härtbar sein. Die thermisch härtbaren erfindungsgemäßen Slurries wiederum können selbstvernetzend oder fremdvernetzend sein.

Im Rahmen der vorliegenden Erfindung bedeutet der Begriff "physikalische Härtung" die Härtung einer Schicht aus einem Beschichtungsstoff durch Verfilmung durch Lösemittelabgabe aus dem Beschichtungsstoff, wobei die Verknüpfung innerhalb der Beschichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Im Rahmen der vorliegenden Erfindung bezeichnet der Begriff "selbstvernetzend" die Eigenschaft eines Bindemittels mit sich selbst Vernetzungsreaktionen einzugehen. Voraussetzung hierfür ist, daß in den Bindemitteln bereits beide Arten von komplementären reaktiven funktionellen Gruppen enthaltend sind, die für eine Vernetzung notwendig sind. Als fremdvernetzend werden dagegen solche erfindungsgemäßen Slurries bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Im Rahmen der vorliegenden Erfindung ist unter aktinischer Strahlung elektromagnetische Strahlung, wie nahes Infrarot (NIR), sichtbares Licht, UV-Strahlung oder Röntgenstrahlung, insbesondere UV-Strahlung, und Korpuskularstrahlung wie Elektronenstrahlung zu verstehen.

Werden die thermische und die Härtung mit aktinischem Licht gemeinsam angewandt, spricht man auch von "Dual Cure" und "Dual-Cure-Pulverslurry-Klarlack".

Vorzugsweise ist die erfindungsgemäße Slurry thermisch oder thermisch und mit aktinischer Strahlung härtbar.

Die erfindungsgemäße Slurry enthält in einer bevorzugten Ausgestaltung mindestens ein, insbesondere ein, Netzmittel, ausgewählt aus der Gruppe, bestehend aus alkoxylierten Fettalkoholen mit 16 bis 18 Kohlenstoffatomen im Alkylrest und im statistischen Mittel mindestens 20, vorzugsweise mindestens 25, bevorzugt mindestens 30, besonders bevorzugt mindestens 35, ganz besonders bevorzugt mindestens 40 und insbesondere mindestens 45 Oxaalkandiyl-Gruppen im Molekül.

Geeignete Oxaalkandiyl-Gruppen sind 1-Oxapropan-1,3-diyl, 1-Oxabutan-1,4-diyl, 1-Oxabutan-1,3-diyl, 1-Oxapentan-1,5-diyl oder 1-Oxapentan-1,3-diyl, bevorzugt 1-Oxapropan-1,3-diyl und 1-Oxabutan-1,3-diyl, insbesondere 1-Oxapropan-1,3-diyl (Ethylenoxid-Gruppe).

Das Netzmittel kann mindestens zwei Arten dieser Oxaalkandiyl-Gruppen enthalten. Die Oxaalkandiyl-Ketten können dabei statistisch, alternierend oder blockartig aufgebaut sein. Vorzugsweise enthält das Netzmittel nur eine Art von Oxaalkandiyl-Gruppen, insbesondere die Ethylenoxid-Gruppen.

Die erfindungsgemäß bevorzugt verwendeten Netzmittel aus der Gruppe der Fettalkohole mit 16 bis 18 Kohlenstoffatome im Alkylrest und mit mindestens 20 Ethylenoxid-Gruppen im Molekül sind handelsübliche Verbindungen und werden beispielsweise von der Firma BASF Aktiengesellschaft unter der Marke Lutensol® AT 25 (25 Ethylenoxid-Gruppen im Molekül) und AT 50 (50 Ethylenoxid-Gruppen im Molekül) vertrieben.

Vorzugsweise werden die erfindungsgemäß zu verwendenden Netzmittel in einer Menge von 0,01 bis 2,5, bevorzugt 0,05 bis 2,4, besonders bevorzugt 0,1 bis 2,2, ganz besonders bevorzugt 0,15 bis 2 und insbesondere 0,2 bis 1,8 Gew.-%, jeweils bezogen auf eine gegebene Klarlack-Slurry, verwendet.

Die erfindungsgemäße Slurry kann weiterhin mindestens ein, insbesondere ein, wasserlösliches Salz vorzugsweise in einer Menge von 0,1 bis 50 mmol pro 1.000 g an in der erfindungsgemäßen Slurry enthaltenem Wasser enthalten. Bevorzugt werden 0,2 bis 40, besonders bevorzugt 0,3 bis 30, ganz besonders bevorzugt 0,4 bis 20, insbesondere 0,5 bis 10 und speziell 0,5 bis 8 mmol/1.000 g Wasser verwendet.

Das Salz ist rückstandsfrei oder im wesentlichen rückstandsfrei zersetzbar. Dies bedeutet, daß es bei seiner Zersetzung keine Rückstände oder Rückstände in einer Menge bildet, die nachteilige technische Effekte in den erfindungsgemäßen Klarlackierungen hervorruft.

Das Salz kann mit Hilfe von Hitze und/oder aktinischer Strahlung zersetzbar sein. Vorzugsweise ist es thermisch zersetzbar. Bevorzugt ist es unter den Bedingungen der Härtung der aus den erfindungsgemäßen Slurries hergestellten erfindungsgemäßen Klarlackschichten zersetzbar. Erfindungsgemäß ist es von Vorteil, wenn das Salz bei Temperaturen oberhalb 100°C zersetzbar ist. Vorzugsweise ist die Zersetzung des Salzes bei 250, bevorzugt 200, besonders bevorzugt 190 und insbesondere 180°C beendet. Ganz besonders bevorzugt ist es, wenn die Zersetzung schon bei 140 bis 150°C in ausreichendem Maße oder sogar vollständig erfolgt.

Bei der Zersetzung des Salzes können sich die unterschiedlichsten organischen, anorganischen und metallorganischen Zersetzungsprodukte bilden. So kann es sich bei den Zersetzungsprodukten um flüchtige Elemente, neutrale organische oder anorganische Wasserstoffverbindungen, organische und anorganische Basen, organische und anorganische Säuren oder Oxide handeln.

Beispiele für flüchtige Elemente sind Phosphor, Schwefel, Stickstoff oder Sauerstoff, insbesondere Stickstoff.

Beispiele für neutrale organische und anorganische Wasserstoffverbindungen sind Wasser oder Kohlenwasserstoffe, insbesondere Wasser.

Beispiele für organische und anorganische Basen sind Ammoniak, Methylamin, Dimethylamin oder Trimethylamin, insbesondere Ammoniak.

Beispiele für organische und anorganische Säuren sind Ameisensäure, Essigsäure, Propionsäure, Oxalsäure, Zitronensäure, Weinsäure, Salzsäure, Bromwasserstoff, Phosphorsäure, phosphorige Säure, Amidosulfonsäure, Schwefelsäure, schwefelige Säure, Thioschwefelsäure, HSCN oder Schwefelwasserstoff, insbesondere Essigsäure.

Beispiele für Oxide sind Kohlendioxid, Schwefeldioxid, Schwefeltrioxid oder Phosphoroxide, insbesondere Kohlendioxid.

Vorzugsweise wird ein Salz ausgewählt, dessen Zersetzungsprodukte nicht oder nur geringfügig toxisch und/oder nicht korrosiv oder nur geringfügig korrosiv sind. Bevorzugt wird in ein Salz ausgewählt, das als Zersetzungsprodukte Wasser, Stickstoff, Kohlendioxid, Ammoniak und organische Säuren bildet.

Besonders bevorzugt wird das Salz aus der Gruppe der Ammoniumsalze, ganz besonders bevorzugt aus der Gruppe, bestehend aus Salzen von Ammoniak und/oder organischen Aminen mit organischen und anorganischen Säuren, ausgewählt.

Insbesondere wird das Ammoniumsalz aus der Gruppe bestehend aus Ammoniumcarbonat, Ammoniumrhodanid, Ammoniumsulfamat, Ammoniumsulfitmonohydrat, Ammoniumformiat, Ammoniumacetat, Ammoniumhydrogenoxalatmonohydrat, Diammoniumoxalatmonohydrat, Ammoniumcitrat und Ammoniumtartrat ausgewählt. Von diesen sind wiederum Ammoniumcarbonat und Ammoniumacetat ganz besonders vorteilhaft und werden deshalb erfindungsgemäß ganz besonders bevorzugt verwendet.

Die erfindungsgemäße Slurry enthält dimensionsstabile Partikel. Im Rahmen der vorliegenden Erfindung bedeutet "dimensionsstabil", daß die Partikel unter den üblichen und bekannten Bedingungen der Lagerung und der Anwendung von Klarlack-Slurries, wenn überhaupt, nur geringfügig agglomerieren und/oder in kleinere Teilchen zerfallen, sondern auch unter dem Einfluß von Scherkräften im wesentlichen ihre ursprünglichen Form bewahren. Dabei können die Partikel hochviskos und/oder fest sein. Vorzugsweise sind die dimensionsstabilen Partikel fest.

Für die erfindungsgemäße Slurry ist es vorteilhaft, wenn die mittlere Teilchengröße der Partikel bei 0,8 bis 20 µm und besonders bevorzugt bei 1,5 bis 15 µm liegt. Unter mittlerer Teilchengröße wird der nach der Laserbeugungsmethode ermittelte 50%-Medianwert verstanden, d.h., 50% der Partikel haben einen Teilchendurchmesser ≤ dem Medianwert und 50% der Partikel einen Teilchendurchmesser ≥ dem Medianwert. Dabei haben vorzugsweise mindestens 99% der Partikel eine Teilchengröße <30 µm.

Slurries mit derartigen mittleren Teilchengrößen und einem Lösemittelgehalt von <1 % weisen ein besseres Applikationsverhalten auf und zeigen bei den applizierten Schichtdicken von >30 µm, wie sie derzeitig in der Automobilindustrie bei der Endlackierung von Automobilen praktiziert werden, eine deutlich geringere Neigung zu Kochern und zum "mud-cracking" als herkömmliche Klarlack-Slurries.

Die Teilchengröße findet ihre obere Begrenzung dann, wenn die Partikel aufgrund ihrer Größe beim Einbrennen nicht mehr vollständig verlaufen können, und damit der Filmverlauf negativ beeinflußt wird. In Fällen geringerer Ansprüche an das Aussehen kann sie jedoch auch höher liegen. Als Obergrenze werden 30 µm für sinnvoll erachtet, da ab dieser Teilchengröße mit einer Verstopfung der Sprühdüsen und Spülkanäle der hochempfindlichen Applikationsapparaturen zu rechnen ist.

Die erfindungsgemäße Slurry ist frei vorzugsweise im wesentlichen oder völlig frei von organischen Lösemitteln. Im Rahmen der vorliegenden Erfindung bedeutet dies, daß sie einen Restgehalt an flüchtigen Lösemitteln von <3 Gew.-%, bevorzugt <2 Gew.-% und besonders bevorzugt <1 Gew.-% hat.

Vorzugsweise ist die erfindungsgemäße Slurry im vorstehend genannten Sinne im wesentlichen oder völlig frei von externen Emulgatoren (zu »Emulgatoren« vgl. Johan Bieleman, »Lackadditive«, Seiten 160 bis 100, »Grenzflächenaktive Verbindungen«). Hiervon sind die alkoxylierten C₁₆-C₁₈-Fettalkohole ausgenommen, die den erfindungsgemäßen Slurries vorzugsweise bei ihrer Herstellung durch das Sekundärdispersionsverfahren über die organischen Lösung oder über das Wasser der Bestandteile zugesetzt werden.

Die vorstehend beschriebenen bevorzugten Teilchengrößen können auch ohne Zuhilfenahme von zusätzlichen externen Emulgatoren erhalten werden, wenn die erfindungsgemäße Slurry einen Gehalt an potentiell ionischen Gruppen von 0,05 bis 1, vorzugsweise 0,05 bis 0,9 bevorzugt 0,05 bis 0,8, besonders bevorzugt 0,05 bis 0,7 und insbesondere 0,05 bis 0,6 meq/g Festkörper hat. Vorzugsweise wird die Menge an Neutralisationsmitteln so gewählt, daß der Neutralisationsgrad bei 100%, bevorzugt unter 80%, besonders bevorzugt unter 60% und insbesondere unter 50% liegt.

Die chemische Natur des Bindemittels ist in dieser Hinsicht in der Regel nicht beschränkend, solange hierin Ionen bildende Gruppen enthalten sind, die über eine Neutralisation in Salzgruppen überführbar sind und dadurch eine ionische Stabilisierung der Partikel in Wasser übernehmen können.

Als Anionen bildende Gruppen kommen Säuregruppen wie Carbonsäure-, Sulfonsäure- oder Phosphonsäuregruppen, insbesondere Carbonsäuregruppen, in Betracht. Demgemäß werden als Neutralisationsmittel Basen, wie Alkalimetallhydroxide, Ammoniak oder Amine verwendet. Alkalimetallhydroxide sind nur in beschränktem Maße einsetzbar, da die Alkalimetallionen beim Einbrennen nicht flüchtig sind und durch ihre Unverträglichkeit mit organischen Stoffen den Film trüben und zu Glanzverlusten führen können. Daher sind Ammoniak oder Amine bevorzugt. Im Falle von Aminen werden tertiäre Amine bevorzugt. Beispielhaft seien N,N-Dimethylethanolamin oder Aminomethylpropanolamin (AMP) genannt.

Als Kationen bildende Gruppen kommen primäre, sekundäre oder tertiäre Amine in Betracht. Demgemäß werden als Neutralisationsmittel insbesondere niedermolekulare organische Säuren wie Ameisensäure, Essigsäure, Dimethylolpropionsäure oder Milchsäure verwendet.

Für den bevorzugten Einsatz der erfindungsgemäß Slurry in der Automobildeck- und/oder -reparaturlackierung als unpigmentierte Klarlacke werden Polymere oder Oligomere mit Säuregruppen als Ionen bildende Gruppen bevorzugt, da diese sogenannten anionischen Bindemittel in der Regel eine bessere Resistenz gegen Vergilbung als die Klasse der kationischen Bindemittel aufweisen.

Doch kationische Bindemittel mit in Kationen überführbaren Gruppen wie Aminogruppen sind prinzipiell ebenfalls verwendbar, sofern das Einsatzgebiet deren typische Nebeneigenschaften wie ihre Neigung zur Vergilbung verkraftet.

Für die erfindungsgemäßen Slurries ist es wesentlich, daß die dimensionsstabilen Partikel als Bindemittel mindestens ein Methacrylatcopolymerisat enthalten, das, bezogen auf ein gegebenes Methacrylatcopolymerisat, mindestens 90, vorzugsweise mindestens 95 und insbesondere mindestens 99 Gew.-% Methacrylatcomonomere, inklusive potentiell ionische Gruppen enthaltende Methacrylatcomonomere, einpolymerisiert enthalten.

Vorzugsweise handelt es sich bei den potentiell ionische Gruppen enthaltenden (Meth)Acrylatcomonomeren um Acrylsäure, beta-Carboxyethylacrylat und/oder Methacrylsäure, insbesondere Methacrylsäure. Vorzugsweise werden die potentiell ionische Gruppen enthaltenden (Meth)Acrylatcomonomeren in einer Menge in die Methacrylatcopolymerisate einpolymerisiert, daß der vorstehend beschriebene Gehalt der Partikel an potentiell ionischen Gruppen problemlos eingestellt werden kann. Vorzugsweise werden sie in einer Menge von 0,1 bis 3, bevorzugt 0,2 bis 2,8, besonders bevorzugt 0,3 bis 2,6, ganz besonders bevorzugt 0,4 bis 2,4 und insbesondere 0,5 bis 2,2 Gew.-%, jeweils bezogen auf ein gegebenes Methacrylatcopolymerisat, in die Methacrylatcopolymerisate einpolymerisiert.

Vorzugsweise weisen die Methacrylatcopolymerisate eine Glasübergangstemperatur T_{g} von maximal 50°C auf; dabei soll die Glasübergangstemperatur T_{g} vorzugsweise 0, bevorzugt 10 und insbesondere 20°C nicht unterschreiten.

Vorzugsweise wird die Glasübergangstemperatur T_{g} der Methacrylatcopolymerisate über mindestens ein von reaktiven funktionellen Gruppen und von potentiell ionischen Gruppen freies Methacrylatcomonomer eingestellt. Bevorzugt wird die Glasübergangstemperatur T_{g} über mindestens zwei, insbesondere zwei, von reaktiven funktionellen Gruppen und von potentiell ionischen Gruppen freien Methacrylatcomonomeren eingestellt.

Vorzugsweise weichen die Glasübergangstemperaturen T_{g} der jeweiligen Homopolymerisate der von reaktiven funktionellen Gruppen und von potentiell ionischen Gruppen freien Methacrylatcomonomeren um maximal 40°C voneinander ab.

Beispiele geeigneter von reaktiven funktionellen Gruppen und von potentiell ionischen Gruppen freien Methacrylatcomonomeren sind Methyl-, Ethyl-, n-Propyl-, n-Butyl-, i-Butyl-, tert.-Butyl-, n-Pentyl-, Isoamyl-, Cyclopentyl-, n-Hexyl- und Cyclohexylmethacrylat. Von diesen sind i-Butylmethacrylat (Glasübergangstemperatur T_{g} des Homopolymerisats: 53°C = 326 K) und n-Butylmethacrylat (Glasübergangstemperatur T_{g} des Homopolymerisats: 20°C = 293 K) von Vorteil und werden deshalb besonders bevorzugt verwendet.

Die Menge der in die erfindungsgemäß zu verwendenden Methacrylatcopolymerisate einpolymerisierten, von reaktiven funktionellen Gruppen und von potentiell ionischen Gruppen freien Methacrylatcomonomeren kann breit variieren. Wesentlich ist, daß die Menge so gewählt wird, daß die resultierenden Methacrylatcopolymerisate die vorstehend beschriebenen Glasübergangstemperaturen T_{g} aufweisen. Vorzugsweise liegt die Menge bei mindestens 50, bevorzugt mindestens 55, besonders bevorzugt mindestens 58 Gew.-%, in einzelnen Fällen können auch noch höhere Mengen, mindestens 65 und insbesondere mindestens 70 Gew.-% bevorzugt sein, jeweils bezogen auf ein gegebenes Methacrylatcopolymerisat.

Dabei kann das Gewichtsverhältnis der besonders bevorzugt verwendeten Methacrylatcomonomeren n-Butylmethacrylat und i-Butylmethacrylat breit variieren. Vorzugsweise liegt das Gewichtsverhältnis n : i bei 30 : 1 bis 1 : 20, bevorzugt 25 : 1 bis 1 : 15, besonders bevorzugt 20 : 1 bis 1 : 10, ganz besonders bevorzugt 18 : 1 bis 1 : 5 und insbesondere 17 : 1 bis 1 : 1.

Handelt es sich bei den erfindungsgemäßen Slurries um physikalisch härtbare, enthalten die Methacrylatcopolymerisate keine oder nur eine für die Vernetzung unwesentliche Anzahl einer reaktiven funktionellen Gruppen.

Handelt es sich bei den erfindungsgemäßen Slurries um thermisch selbstvernetzende, enthalten die Methacrylatcopolymerisate die nachstehend beschriebenen komplementären reaktiven funktionellen Gruppen für die thermische Vernetzung und/oder reaktive funktionelle Gruppen, die "mit sich selbst", d. h. Gruppen der eigenen Art, vernetzen können.

Handelt es sich bei den erfindungsgemäßen Slurries um mit aktinischer Strahlung härtbare, können die Methacrylatcopolymerisate reaktive funktionelle Gruppen mit mindestens einer mit aktinischer Strahlung aktivierbaren Bindung enthalten. Diese reaktiven funktionellen Gruppen sind in den Methacrylatcopolymerisaten der mit aktinischer Strahlung härtbaren erfindungsgemäßen Slurries zwingend enthalten, wenn die Slurries keine weiteren strahlenhärtbaren Bestandteile enthalten.

Handelt es sich bei den erfindungsgemäßen Slurries um Dual-Cure-Slurries, enthalten die Methacrylatcopolymerisate reaktive funktionelle Gruppen für die thermische Vernetzung und/oder reaktive funktionelle Gruppen mit mindestens einer mit aktinischer Strahlung aktivierbaren Bindung. Die reaktiven funktionellen Gruppen mit mindestens einer mit aktinischer Strahlung aktivierbaren Bindung sind in den Methacrylatcopolymerisaten der erfindungsgemäßen Dual-Cure-Slurries zwingend enthalten, wenn die Dual-Cure-Slurries keine weiteren strahlenhärtbaren Bestandteile enthalten.

Beispiele geeigneter erfindungsgemäß zu verwendender komplementärer reaktiver funktioneller Gruppen sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R^{'} und R^{"} stehen für gleiche oder verschiedene aliphatische Reste oder sind miteinander zu einem aliphatischen oder heteroaliphatischen Ring verknüpft.

### Übersicht: Beispiele komplementärer reaktiver funktioneller Gruppen

| | |
|---|---|
| **Bindemittel und Vernetzungsmittel** | |
| **oder** | |
| **Vernetzungsmittel und Bindemittel** | |
| -SH | -C(O)-OH |
| -NH₂ | -C(O)-O-C(O)- |
| -OH | -NCO |
| -O-(CO)-NH-(CO)-NH₂ | -NH-C(O)-OR |
| -O-(CO)-NH₂ | -CH₂-OH |
| >NH | -CH₂-O-R |
| | -NH-CH₂-O-R |
| | -NH-CH₂-OH |
| | -N(-CH₂-O-R)₂ |
| | -NH-C(O)-CH(-C(O)OR)₂ |
| | -NH-C(O)-CH(-C(O)OR)(-C(O)-R) |
| | -NH-C(O)-NR'R" |
| | > Si(OR)₂ |
| | 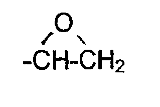 |
| | 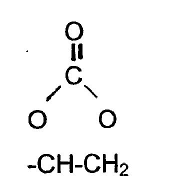 |
| -C(O)-OH | 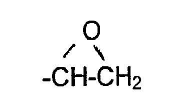 |
| | -C(O)-N(CH₂-CH₂-OH)₂ |

Die Auswahl der jeweiligen komplementären reaktiven funktionellen Gruppen richtet sich zum einen danach, daß sie bei der Herstellung der Bindemittel sowie bei der Herstellung, der Lagerung, der Applikation und dem Aufschmelzen der erfindungsgemäßen Slurries keine unerwünschten Reaktionen, insbesondere keine Bildung von Polyelektrolytkomplexen oder vorzeitige Vernetzung, eingehen und/oder die Härtung mit aktinischer Strahlung nicht stören oder inhibieren dürfen, und zum anderen danach, in welchem Temperaturbereich die Vernetzung stattfinden soll.

Vorzugsweise werden bei den erfindungsgemäßen Slurries Vernetzungstemperaturen von 60 bis 180°C angewandt. Es werden daher vorzugsweise Bindemittel mit Thio-, Hydroxyl-, N-Methylolamino- N-Alkoxymethylamino-, Imino-, Carbamat- und/oder Allophanatgruppen, bevorzugt Hydroxylgruppen, einerseits und vorzugsweise Vernetzungsmittel mit Anhydrid-, Epoxy-, blockierten und unblockierten, insbesondere blokkierten, Isocyanat-, Urethan-, Methylol-, Methylolether-, Siloxan-, Carbonat-, Amino-, Hydroxy- und/oder beta-Hydroxyalkylamidgruppen, bevorzugt blockierte Isocyanat-, Carbamat- und/oder N-Alkoxymethylaminogruppen, andererseits angewandt.

Im Falle selbstvernetzender erfindungsgemäßer Slurries enthalten die Bindemittel insbesondere Methylol-, Methylolether- und/oder N-Alkoxymethylaminogruppen.

Komplementäre reaktive funktionelle Gruppen, die für die Verwendung in den thermisch fremdvernetzenden erfindungsgemäßen Slurries und den erfindungsgemäßen Dual-Cure-Slurries besonders gut geeignet sind, sind Hydroxylgruppen einerseits und blockierte Isocyanatgruppen andererseits.

Die Funktionalität der Bindemittel bezüglich der vorstehend beschriebenen reaktiven funktionellen Gruppen kann sehr breit variieren und kann sich z.B. nach der Vernetzungsdichte, die man erzielen will, und/oder nach der Funktionalität der jeweils angewandten Vernetzungsmittel richten. Die OH-Zahl der hydroxylgruppenhaltigen Bindemittel liegt bei >150, bevorzugt bei >170. Überraschend ist, daß die erfindungsgemäßen Klarlackslurries, die Bindemittel mit derart hohen OH-Zahlen enthalten, in wäßrigen Dispersionen äußerst stabil sind. Die erfindungsgemäße Slurries zeigen z.B. bei einer 16-stündigen Lagerung bei einer Temperatur von 55°C keinerlei Verschlechterung in ihren Applikationseigenschaften.

Die vorstehend beschriebenen komplementären reaktiven funktionellen Gruppen können nach den üblichen und bekannten Methoden der Polymerchemie in die Bindemittel eingebaut werden. Dies kann beispielsweise durch den Einbau von Methacrylatcomonomeren, welche die entsprechenden reaktiven funktionellen Gruppen tragen, und/oder mit Hilfe polymeranaloger Reaktionen geschehen.

Beispiele geeigneter Methacrylatcomonomeren mit reaktiven funktionellen Gruppen sind Methacrylatcomonomere, welche mindestens eine Hydroxyl-, Amino-, Alkoxymethylamino-, Carbamat-, Allophanat- oder Iminogruppe pro Molekül tragen, wie
- Hydroxyalkylester der Methacrylsäure, die sich von einem Alkylenglykol ableiten, das mit der Säure verestert ist, oder die durch Umsetzung der Methacrylsäure mit einem Alkylenoxid wie Ethylenoxid oder Propylenoxid erhältlich sind, insbesondere Hydroxyalkylester der Methacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl- oder 4-Hydroxybutylmethacrylat; oder Hydroxycycloalkylester wie Octahydro-4,7-methano-1 H-indendimethanol-, 1,4-Bis-(hydroxymethyl)cyclohexan- oder Methylpropandiolmonomethacrylat; oder Umsetzungsprodukte aus cyclischen Estern, wie z.B. epsilon-Caprolacton und diesen Hydroxyalkylmethacrylaten;
- Umsetzungsprodukte aus Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
- Aminoethylmethacrylat oder N-Methylaminoethylmethacrylat, die auch der Einführung von potentiell ionischen Gruppen dienen können;
- N,N-Di(methoxymethyl)aminoethylmethacrylat oder N,N-Di(butoxymethyl)-aminopropylmethacrylat;
- Methacrylsäureamide wie Methacrylsäureamid, N-Methyl-, N-Methylol-, N,N-Dimethylol-, N-Methoxymethyl-, N,N-Di(methoxymethyl)-, N-Ethoxy-methyl- und/oder N,N-Di(ethoxyethyl)-methacrylsäureamid;
- Methacryloyloxyethyl-, propyl- oder butylcarbamat oder -allophanat; weitere Beispiele geeigneter Methacrylatcomonomere, welche Carbamatgruppen enthalten, werden in den Patentschriften US 3,479,328 A, US 3,674,838 A, US 4,126,747 A, US 4,279,833 A oder US 4,340,497 A beschrieben;

In untergeordneten Mengen können die reaktiven funktionellen Gruppen für die thermische Vernetzung über sonstige olefinisch ungesättigten Monomere, wie die entsprechenden Acrylate, Allylamin, Allylalkohol oder Polyole, wie Trimethylolpropanmono- oder -diallylether oder Pentaerythritmono-, -di- oder -triallylether, eingeführt werden.

Die Bindemittel der Dual-Cure-Slurries können im statistischen Mittel mindestens eine, vorzugsweise mindestens zwei, Gruppe(n) mit mindestens einer mit aktinischer Strahlung aktivierbaren Bindung(en) pro Molekül enthalten.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die erfindungsgemäß bevorzugte Gruppe eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der hier in Rede stehenden Gruppe vorliegen. Erfindungsgemäß ist es von besonderem Vorteil zwei, insbesondere eine, Doppelbindung zu verwenden.

Das Dual-Cure-Bindemittel enthält im statistischen Mittel mindestens eine der vorstehend beschriebenen mit aktinischer Strahlung aktivierbaren Gruppen. Dies bedeutet, daß die Funktionalität des Bindemittels in dieser Hinsicht ganzzahlig, d.h., beispielsweise gleich zwei, drei, vier, fünf oder mehr ist, oder nicht ganzzahlig, d.h., beispielsweise gleich 2,1 bis 10,5 oder mehr ist. Welche Funktionalität man wählt, richtet sich nach den Anforderungen, die an die jeweiligen Dual-Cure-Slurries gestellt werden.

Werden im statistischen Mittel mehr als eine mit aktinischer Strahlung aktivierbare Gruppe pro Molekül angewandt, sind die Gruppen strukturell voneinander verschieden oder von gleicher Struktur.

Sind sie strukturell voneinander verschieden, bedeutet dies im Rahmen der vorliegenden Erfindung, daß zwei, drei, vier oder mehr, insbesondere aber zwei, mit aktinischer Strahlung aktivierbare Gruppen verwendet werden, die sich von zwei, drei, vier oder mehr, insbesondere aber zwei, Monomerklassen ableiten.

Beispiele geeigneter Gruppen sind (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, insbesondere aber Acrylatgruppen.

Vorzugsweise sind die Gruppen über Urethan-, Harnstoff-, Allophanat-, Ester-, Ether- und/oder Amidgruppen, insbesondere aber über Estergruppen, an die jeweiligen Grundstrukturen der Bindemittel gebunden. Üblicherweise geschieht dies durch übliche und bekannte kontinuierliche polymeranaloge Reaktionen wie etwa die Reaktion von seitenständigen Glycidylgruppen mit olefinisch ungesättigten Comonomeren, die eine Säuregruppe enthalten, von seitenständigen Hydroxylgruppen mit den Halogeniden dieser Comonomeren, von Hydroxylgruppen mit Doppelbindungen enthaltenden Isocyanaten wie Vinylisocyanat, Methacryloylisocyanat und/oder 1-(1-Isocyanato-1-methylethyl)-3-(1-methylethenyl)-benzol (TMI® der Firma CYTEC) oder von seitenständigen Isocyanatgruppen mit den vorstehend beschriebenen hydroxylgruppenhaltigen Comonomeren.

Es können in den Partikeln indes auch Gemische aus rein thermisch härtbaren und rein mit aktinischer Strahlung härtbaren Bindemitteln angewandt werden.

Verfahren zur Herstellung der Methacrylatcopolymerisate werden beispielsweise in der europäischen Patentanmeldung EP 0 767 185 A1, den deutschen Patenten DE 22 14 650 B1 oder DE 27 49 576 B1 und den amerikanischen Patenten US 4,091,048 A, US 3,781,379 A, US 5,480,493 A, US 5,475,073 A oder US 5,534,598 A oder in dem Standardwerk Houben-Weyl, Methoden der organischen Chemie, 4. Auflage, Band 14/1, Seiten 24 bis 255, 1961, beschrieben. Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in den Patentanmeldungen DE 1 071 241 B1, EP 0 498 583 A1 oder DE 198 28 742 A1 oder in dem Artikel von K. Kataoka in Chemical Engineering Science, Band 50, Heft 9, 1995, Seiten 1409 bis 1416, beschrieben werden, in Betracht. In einer bevorzugten Variante werden die Methacrylatcopolymerisate unter Druck hergestellt.

Der Gehalt der dimensionsstabilen Partikel der erfindungsgemäßen Slurry an den vorstehend beschriebenen Bindemitteln kann breit variieren. Vorzugsweise liegt er bei 5 bis 80, bevorzugt 6 bis 75, besonders bevorzugt 7 bis 70, ganz besonders bevorzugt 8 bis 65 und insbesondere 9 bis 60 Gew.-%, jeweils bezogen auf den Festkörper der erfindungsgemäßen Slurries. Im Falle der physikalisch härtbaren und der mit aktinischer Strahlung härtbaren, insbesondere aber der physikalisch härtbaren, erfindungsgemäßen Slurries kann der Gehalt bis zu 100 Gew.-% betragen.

Die dimensionsstabilen Partikel der thermisch oder thermisch und mit aktinischer Strahlung härtbaren erfindungsgemäßen Slurries können Vernetzungsmittel enthalten, die komplementäre reaktive funktionelle Gruppen für die thermische Vernetzung und/oder reaktive funktionelle Gruppen mit mindestens einer mit aktinischer Strahlung aktivierbaren Bindung aufweisen.

Als Vernetzungsmittel sind alle auf dem Gebiet der lichtstabilen Klarlackierungen gebräuchlichen Vernetzungsmittel geeignet. Beispiele geeigneter Vernetzungsmittel sind
- Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A1 oder EP 0 245 700 A1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden,
- Carboxylgruppen enthaltende Verbindungen oder Harze, wie sie beispielsweise in der Patentschrift DE 196 52 813 A1 oder 198 41 408 A1 beschrieben werden, insbesondere 1,12-Dodecandisäure,
- Epoxidgruppen enthaltende Verbindungen oder Harze, wie sie beispielsweise in den Patentschriften EP 0 299 420 A1, DE 22 14 650 B1, DE 27 49 576 B1, US 4,091,048 A oder US 3,781,379 A beschrieben werden,
- Tris(alkoxycarbonylamino)triazine, wie sie in den Patentschriften US 4 939 213 A, US 5 084 541 A, US 5 288 865 A oder der Patentanmeldung EP 0 604 922 A beschrieben werden,
- blockierte Polyisocyanate, wie sie beispielsweise in den Patentschriften US 4,444,954 A1, DE 196 17 086 A1, DE 196 31 269 A1, EP 0 004 571 A1 oder EP 0 582 051 A1 beschrieben werden, oder
- beta-Hydroxyalkylamide wie N,N,N',N'-Tetrakis(2-hydroxyethyl)adipamid oder N,N,N',N'-Tetrakis(2-hydroxypropyl)adipamid.

Die vorstehend beschriebenen Vernetzungsmittel können einzeln oder als Gemisch aus mindestens zwei Vernetzungsmitteln eingesetzt werden. Erfindungsgemäß bieten die blockierten Polyisocyanate und/oder Tris(alkoxycarbonyl-amino)triazine, insbesondere die blockierten Polyisocyanate, besondere Vorteile und werden deshalb besonders bevorzugt verwendet.

Es ist erfindungsgemäß bevorzugt, wenn die erfindungsgemäßen Slurries als Vernetzungsmittel Polyisocyanate enthalten, welche mit Pyrazolen blockiert sind.
Als zu blockierende Diisocyanate und Polyisocyanate kommen praktisch alle üblichen und bekannten aromatischen, aliphatischen und cycloaliphatischen Di- und Polyisocyanate, in Betracht. Insbesondere kommen die Diisocyanate und Polyisocyanate in Betracht, die von der Fachwelt als Lackpolyisocyanate bezeichnet werden.

Beispiele geeigneter zu blockierender aromatischer Diisocyanate sind Toluylendiisocyanat, Xylylendiisocyanat, Bisphenylendiisocyanat, Naphthylendiisocyanat oder Diphenylmethandiisocyanat.
Beispiele geeigneter zu blockierender acyclischer aliphatischer Diisocyanate sind Trimethylendiisocyanat, Tetramethylendiisocyanat, Pentamethylendiisocyanat, Hexamethylendiisocyanat, Ethylethylendiisocyanat, Trimethylhexandiisocyanat, Heptamethylendiisocyanat, 4-Isocyanatomethyl-1,8-octamethylen-diisocyanat, oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4-oder 1,3-Bis(4-isocyanatobut-1-yl)cyclohexan.
Beispiele geeigneter cycloaliphatischer Diisocyanate sind Isophorondiisocyanat (= 5-Isocyanato-1-isocyanatomethyl-1,3,3-trimethyl-cyclohexan), 5-lsocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-lsocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan Dicyclohexylmethan-2,4'-diisocyanat oder Dicyclohexylmethan-4,4'-diisocyanat, insbesondere Isophorondiisocyanat.
Beispiele geeigneter zu blockierender Polyisocyanate sind auch isocyanatgruppenhaltige Polyurethanpräpolymere, die durch Reaktion von Polyolen mit einem Überschuß der vorstehend beschriebenen aromatischen, aliphatischen und cycloaliphatischen, vorzugsweise aliphatischen und cycloaliphatischen, Diisocyanaten hergestellt werden cloaliphatischen, Diisocyanaten hergestellt werden können und bevorzugt niederviskos sind. Im Rahmen der vorliegenden Erfindung bezeichnet der Begriff "cycloaliphatisches Diisocyanat" ein Diisocyanat, worin mindestens eine Isocyanatgruppe an einen cycloaliphatischen Rest gebunden ist.
Es können auch Isocyanurat-, Biuret-, Allophanat-, Iminooxadiazindion-, Urethan-, Harnstoff-, Carbodiimid und/oder Uretdiongruppen aufweisende Polyisocyanate verwendet werden, die in üblicher und bekannter Weise aus den vorstehend beschriebenen Diisocyanaten hergestellt werden. Beispiele geeigneter Herstellungsverfahren und Polyisocyanate sind beispielsweise aus den Patentschriften und Patentanmeldungen CA 2,163,591 A1, US 4,419,513 A1, US 4,454,317 A1, EP 0 646 608 A1, US 4,801,675 A1, EP 0 183 976 A1, DE 40 15 155 A1, EP 0 303 150 A1, EP 0 496 208 A1, EP 0 524 500 A1, EP 0 566 037 A1, US 5,258,482 A1, US 5,290,902 A1, EP 0 649 806 A1, DE 42 29 183 A1 oder EP 0 531 820 A1 bekannt.
Außerdem kommen noch niedermolekulare, oligomere und polymere Verbindungen in Betracht, die Isocyanatgruppen und Gruppen enthalten, die mit aktinischer Strahlung, insbesondere UV-Licht oder Elektronenstrahlung aktiviert werden. Beispiele geeigneter Verbindungen dieser Art sind die in der europäischen Patentanmeldung EP 0 928 800 A1 beschriebenen Urethan(meth)acrylate, die (Meth)Acrylatgruppen und freie Isocyanatgruppen aufweisen.

Die als Blockierungsmittel für die Isocyanate zu verwendenden Pyrazole sind bevorzugt disubstituiert. Hierbei kann ein solches Pyrazol zwei gleiche oder zwei von einander verschiedene Substituenten tragen. Welche Variante im Einzelfall gewählt wird, richtet sich zum einen nach der Zugänglichkeit der Ausgangsprodukte, der Ausbeute bei der Herstellung und dem für die Anwendung erforderlichen Eigenschaftsprofil.
Als Substituenten kommen grundsätzlich alle Atome, ausgenommen Wasserstoffatome, elektronenziehende oder elektronenschiebende Gruppen und organischen Reste, inklusive elementorganischen Reste, in Betracht, sofern sie nicht selbst unter den Bedingungen der Herstellung der erfindungsgemäßen Di- und Polyisocyanate und/oder der thermischen Härtung mit Isocyanaten reagieren und so die gewünschte Blockierungsreaktion und/oder die thermische Vernetzung stören oder ganz verhindern. Vorzugsweise erhöhen die Substituenten nicht die Deblockierungstemperatur.
Beispiele geeigneter Atome sind Halogenatome, insbesondere Fluor, Chlor und Brom.
Beispiele elektronenziehender oder elektronenschiebender Gruppen sind Nitro- oder Nitrilgruppen; Carbonsäure-, Sulfonsäure- oder Phosphonsäuregruppen; Carboxylat-, Sulfonat- oder Phosphonatgruppen; Carbonsäure-, Sulfonsäure- oder Phosphonsäureester, welche die nachstehend beschriebenen substituierten und unsubstituierten Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste enthalten; primäre, sekundäre oder tertiäre Amidgruppen oder quaternäre Ammoniumgruppen, welche die nachstehend beschriebenen substituierten und unsubstituierten Alkyl-, Cycloalkyl-, Alkylcycloalkyl-, Cycloalkylalkyl-, Aryl-, Alkylaryl-, Cycloalkylaryl-, Arylalkyl- oder Arylcycloalkylreste enthalten; sowie Harnstoffgruppen.
Beispiele geeigneter organischer Reste sind substituierte und unsubstituierte Alkyl-, Cycloalkyl-, Alkylcycloalkyl-, Cycloalkylalkyl-, Aryl-, Alkylaryl-, Cycloalkylaryl-, Arylalkyl- oder Arylcycloalkylreste.
Beispiele geeigneter Alkylreste sind Methyl, Ethyl, Propyl, Isopropyl, n-Butyl, iso-Butyl, tert.-Butyl, Amyl, Hexyl oder 2-Ethylhexyl.
Beispiele geeigneter Cycloalkylreste sind Cyclobutyl, Cyclopentyl oder Cyclohexyl.
Beispiele geeigneter Alkylcycloalkylreste sind Methylencyclohexan, Ethylencyclohexan oder Propan-1,3-diyl-cyclohexan.
Beispiele geeigneter Cycloalkylalkylreste sind 2-, 3- oder 4-Methyl-, -Ethyl-, -Propyl- oder-Butylcyclohex-1-yl.
Beispiele geeigneter Arylreste sind Phenyl, Naphthyl oder Biphenylyl, vorzugsweise Phenyl und Naphthyl und insbesondere Phenyl.
Beispiele geeigneter Alkylarylreste sind Benzyl oder Ethylen- oder Propan-1,3-diyl-benzol.
Beispiele geeigneter Cycloalkylarylreste sind 2-, 3-, oder 4-Phenylcyclohex-1-yl.
Beispiele geeigneter Arylalkylreste sind 2-, 3- oder 4-Methyl-, -Ethyl-, - Propyl- oder -Butylphen-1-yl.
Beispiele geeigneter Arylcycloalkylreste sind 2-, 3- oder 4-Cyclohexylphen-1-yl.
Die vorstehend genannten Alkyl-, Cycloalkyl-, Alkylcycloalkyl-, Cycloalkylalkyl-, Aryl-, Alkylaryl-, Cycloalkylaryl-, Arylalkyl- und Arylcycloalkylreste können mit den vorstehend genannten Atomen und elektronenschiebenden oder elektronenziehenden Gruppen, insbesondere mit Chlor- und/oder Fluoratomen, und/oder mit den nachstehend beschriebenen elementorganischen Resten partiell oder vollständig substituiert sein.
Beispiele geeigneter elementorganischer Reste sind Aryloxy-, Alkyloxy- und Cycloalkyloxyreste, insbesondere Phenoxy-, Naphthoxy-, Methoxy-, Ethoxy-, Propoxy-, Butyloxy- oder Cyclohexyloxyreste; Polyetherreste wie Di-, Tri-, Tetra- oder Pentaethylen- oder -propylenglykolreste; Arylthio-, Alkylthio- und Cycloalkylthioreste, insbesondere Phenylthio-, Naphthylthio-, Methylthio-, Ethylthio-, Propylthio-, Butylthio- oder Cyclohexylthioreste; Silylreste, welche die vorstehend beschriebenen substituierten und unsubstituierten Alkyl-, Cycloalkyl-, Alkylcycloalkyl-, Cycloalkylalkyl-, Aryl-, Alkylaryl-, Cycloalkylaryl-, Arylalkyl- oder Arylcycloalkylreste und/oder Aryloxy-, Alkyloxy- und Cycloalkyloxyreste enthalten; wie Trimethyl-, Tripropyl-, Triethyl-, Dimethylethyl-, Diethylmethyl-, Trimethoxy, Dimethoxyethyl-, Triethoxy-, Tripropoxy- oder Propoxydimethylsilylreste; oder tertiäre Sulfoniumgruppen, welche die vorstehend beschriebenen substituierten und unsubstituierten Alkyl-, Cycloalkyl-, Alkylcycloalkyl-, Cycloalkylalkyl-, Aryl-, Alkylaryl-, Cycloalkylaryl-, Arylalkyl- oder Arylcycloalkylreste enthalten.

Bevorzugte Substituenten sind unsubstituierte Alkyl-, Cycloalkyl-, Alkylcycloalkyl-, Cycloalkylalkyl-, Aryl-, Alkylaryl-, Cycloalkylaryl-, Arylalkyl- oder Arylcycloalkylreste.
Besonders bevorzugte Substituenten sind unsubstituierte Alkylreste, insbesondere die niedrigen Alkylreste wie Methyl, Ethyl, Propyl, Isopropyl, n-Butyl, iso-Butyl, tert.-Butyl. Von diesen bieten die Methylreste wiederum die meisten Vorteile und werden deshalb ganz besonders bevorzugt verwendet.
Bevorzugt werden 3,4-, 3,5- und 4,5-Dialkylpyrazole eingesetzt. Besonders bevorzugte substituierte Pyrazole sind 3,4-Dimethyl- und/oder 3,5-Dimethylpyrazol oder Gemische aus 3,4-Dimethyl- und/oder 3,5-Dimethylpyrazol und Trimethylolpropan als Blockierungsmittel.
Ein Beispiel für ein bevorzugtes blockiertes Polyisocyanat ist das Trimere oder Isocyanurat von Hexamethylendiisocyanat, das mit 3,5-Dimethylpyrazol blockiert ist.
Weitere Beispiele für bevorzugte blockierte Isocyanate sind das mit 3,5-Dimethylpyrazol oder mit 3,5-Dimethylpyrazol und Trimethylolpropan blokkierte Isophorondiisocyanat.

Der Gehalt der dimensionsstabilen Partikel der erfindungsgemäßen Slurry an den Vernetzungsmitteln kann ebenfalls breit variieren und richtet sich in erster Linie nach der Äquivalentgewicht und Menge der Bindemittel einerseits und der Äquivalentgewicht der Vernetzungsmittel andererseits. Vorzugsweise liegt er bei 10 bis 95, bevorzugt 12 bis 94, besonders bevorzugt 14 bis 93, ganz besonders bevorzugt 16 bis 92 und insbesondere 18 bis 90 Gew.-%, jeweils bezogen auf den Festkörper der erfindungsgemäßen Slurry.

Die erfindungsgemäßen Slurries können ferner Melaminharze enthalten. Dies können allgemein bekannte Melaminharze sein, wie sie z.B. in Römpp Lexikon Lacke und Druckfarben, Georg Thieme Verlag, Stuttgart, New York, 1998, auf den Seiten 374 und 375 unter dem Stichwort »Melamin-Harze« beschriebenen sind:

Die dimensionsstabilen Partikel der erfindungsgemäßen Slurry können neben den vorstehend beschriebenen wesentlichen Bestandteilen Additive enthalten, wie sie in Klarlacken üblicherweise verwendet werden. Hierbei ist es wesentlich, daß diese Additive die Glasübergangstemperatur T_{g} der Bindemittel nicht wesentlich absenken.

Beispiele geeigneter Additive sind von den vorstehend beschriebenen Methacrylatcopolymerisaten und Vernetzungsmitteln verschiedene Polymere, Katalysatoren für die Vernetzung Entschäumer, Haftvermittler, Additive zur Verbesserung der Untergrundbenetzung, Additive zur Verbesserung der Oberflächenglätte, Mattierungsmittel, Lichtschutzmittel, Korrosionsinhibitoren, Biozide, Flammschutzmittel oder Polymerisationsinhibitoren, insbesondere Photoinhibitoren, wie sie in dem Buch "Lackadditive" von Johan Bielemann, Wiley-VCH, Weinheim, New York, 1998, beschrieben werden.

Die Katalysatoren sind in den erfindungsgemäße Klarlack-Slurries in Mengen von 0 bis 0,07, bevorzugt 0,001 bis 0,06, besonders bevorzugt 0,02 bis 0,05, insbesondere bevorzugt 0,03 bis 0,05 Gew.-%, bezogen auf den Gesamtfestkörper der Slurry, enthalten. Bevorzugt ist erfindungsgemäß das Arbeiten ohne Katalysatoren. Überraschend ist, daß trotz Einsatz so geringer Mengen an Katalysatoren Klarlackierungen mit den genannten vorteilhaften Eigenschaften resultieren.

Darüber hinaus kann die erfindungsgemäße Dual-Cure-Slurry und die mit aktinischer Strahlung härtbare erfindungsgemäße Slurry noch von den vorstehend beschriebenen Methacrylatcopolymerisaten verschiedene, mit aktinischer Strahlung härtbare Bestandteile als Additive enthalten. Hierbei handelt es sich beispielsweise um
- die in den europäischen Patentanmeldungen EP 0 928 800 A1, EP 0 636 669 A1, EP 0 410 242 A1, EP 0 783 534 A1, EP 0 650 978 A1, EP 0 650 979 A1, EP 0 650 985 A1, EP 0 540 884 A1, EP 0 568 967 A1, EP 0 054 505 A1 oder EP 0 002 866 A1, den deutschen Patentanmeldungen DE 197 09 467 A1, DE 42 03 278 A1, DE 33 16 593 A1, DE 38 36 370 A1, DE 24 36 186 A1 oder DE 20 03 579 B1, den internationalen Patentanmeldungen WO 97/46549 oder WO 99/14254 oder den amerikanischen Patentschriften US 5,824,373 A, US 4,675,234 A, US 4,634,602 A, US 4,424,252 A, US 4,208,313 A, US 4,163,810 A, US 4,129,488 A, US 4,064,161 A oder US 3,974,303 A beschriebenen, zur Verwendung in UV-härtbaren Klarlacken und Pulverklarlacken vorgesehenen Bindemittel;
- mit aktinischer Strahlung härtbare Reaktiwerdünner, wie die in Römpp Lexikon Lacke und Druckfarben, Georg Thieme Verlag, Stuttgart, New York, 1998, auf Seite 491 unter dem Stichwort »Reaktivverdünner« beschriebenen; oder um
- Photoinitiatoren, wie sie in Römpp Chemie Lexikon, 9, erweiterte und neubearbeitete Auflage, Georg Thieme Verlag Stuttgart, Bd. 4, 1991, oder in Römpp Lexikon Lacke und Druckfarben, Georg Thieme Verlag Stuttgart, 1998, Seiten 444 bis 446, beschrieben werden.

Die erfindungsgemäße Slurry kann in der wäßrigen Phase ebenfalls Additive enthalten.

Vorzugsweise handelt es sich dabei um nichtionische und/oder ionische Verdicker. Hierdurch wird der Neigung der vergleichsweise großen festen Partikel zur Sedimentation wirksam begegnet.

Beispiele nichtionischer Verdicker sind Hydroxyethylcellulose und Polyvinylalkohole. Sogenannte nichtionische Assoziativ-Verdicker sind in vielfältiger Auswahl ebenfalls am Markt verfügbar. Sie bestehen in der Regel aus wasserverdünnbaren Polyurethanen, die Reaktionsprodukte von wasserlöslichen Polyetherdiolen, aliphatischen Diisocyanaten und monofunktionellen hydroxylischen Verbindungen mit organophilem Rest sind.

Ebenfalls kommerziell erhältlich sind ionische Verdicker. Diese enthalten üblicherweise anionische Gruppen und basieren insbesondere auf speziellen Polyacrylatharzen mit Säuregruppen, die teilweise oder vollständig neutralisiert sein können.

Beispiele geeigneter, erfindungsgemäß zu verwendender Verdicker sind aus dem Lehrbuch "Lackadditive" von Johan Bielemann, Wiley-VCH, Weinheim, New York, 1998, Seiten 31 bis 65, oder der deutschen Patentanmeldung DE 199 08 018 A1,Seite 13, Zeile 18, bis Seite 14, Zeile 48, bekannt.

Für die erfindungsgemäße Slurry kann es vorteilhaft sein, wenn beide der vorstehend beschriebenen Verdicker-Typen hierin enthalten sind. In den allermeisten Fällen reicht jedoch ein Verdicker, insbesondere ein nichtionischer Verdicker, aus, um das gewünschte strukturviskose Verhalten einzustellen.

Die Menge der zuzusetzenden Verdicker und, sofern zwei unterschiedliche Verdicker angewandt werden, das Verhältnis von ionischem zu nichtionischem Verdicker richten sich nach der gewünschten Viskosität der erfindungsgemäßen Slurry, die wiederum von der benötigten Absetzstabilität und den speziellen Bedürfnissen der Spritzapplikation vorgegeben werden. Der Fachmann kann daher die Menge der Verdicker und gegebenenfalls das Verhältnis der Verdicker-Typen zueinander anhand einfacher Überlegungen gegebenenfalls unter Zuhilfenahme von Vorversuchen ermitteln.

Vorzugsweise wird ein Viskositätsbereich von 50 bis 1500 mPas bei einer Scherrate von 1000 s⁻¹ und von 150 bis 8000 mPas bei einer Scherrate von 10 s⁻¹ sowie von 180 bis 12000 mPas bei einer Scherrate von 1 s⁻¹ eingestellt.

Dieses als "strukturviskos" bekannte Viskositätsverhalten beschreibt einen Zustand, der einerseits den Bedürfnissen der Spritzapplikation und andererseits auch den Erfordernissen hinsichtlich Lager- und Absetzstabilität Rechnung trägt: Im bewegten Zustand, wie beispielsweise beim Umpumpen der erfindungsgemäßen Slurry in der Ringleitung der Lackieranlage und beim Versprühen, nimmt die erfindungsgemäße Slurry einen niederviskosen Zustand ein, der eine gute Verarbeitbarkeit gewährleistet. Ohne Scherbeanspruchung hingegen steigt die Viskosität an und gewährleistet auf diese Weise, daß der bereits auf dem zu lackierenden Substrat befindliche Lack eine verringerte Neigung zum Ablaufen an senkrechten Flächen zeigt ("Läuferbildung"). In gleicher Weise führt die höhere Viskosität im unbewegten Zustand, wie etwa bei der Lagerung, dazu, daß ein Absetzen der festen Partikel größtenteils verhindert wird oder ein Wiederaufrühren der während der Lagerzeit nur schwach abgesetzten erfindungsgemäßen Slurry gewährleistet ist.

Die wäßrige Phase der erfindungsgemäßen Slurry kann des weiteren im Film einvernetzbare Verlaufmittel, enthalten.

Beispiele geeigneter Bestandteile dieser Art sind thermisch härtbare Reaktivverdünner wie stellungsisomere Diethyloctandiole oder Hydroxylgruppen enthaltende hyperverzweigte Verbindungen oder Dendrimere wie sie in den deutschen Patentanmeldungen DE 198 05 421 A1, DE 198 09 643 A1 oder DE 198 40 405 A1 beschrieben werden.
Als Verlaufmittel werden in einer erfindungsgemäßen Ausgestaltung alkylierte Polysiloxane, die durch Polyester und/oder Polyether modifiziert sein können, bevorzugt polyethermodifizierte Methylalkylpolysiloxane, besonders bevorzugt polyethermodifizierte Polydimethylsiloxane eingesetzt.
Als Beispiel für ein bevorzugtes polyethermodifiziertes Polydimethylsiloxan kann BYK®-333 genannt werden.
Die Verlaufmittel werden in einer Menge von 0,01 bis 1, bevorzugt 0,04 bis 0,25, insbesondere bevorzugt 0,05 bis 0,06 Gew.-%, bezogen auf den Gesamtfestkörper der Slurry, eingesetzt.

Vorzugsweise wird die erfindungsgemäße Slurry durch das aus der deutschen Patentanmeldung DE 199 08 018 A1 oder aus dem deutschen Patent DE 198 41 842 C2 oder in der deutschen Patentanmeldung 100 55 464.4 beschriebene Sekundärdispersionsverfahren hergestellt.

Bei diesem Verfahren werden die ionisch stabilisierbaren Bindemittel und die Vernetzungsmittel sowie gegebenenfalls die Additive in organischer Lösung gemischt und zusammen mit Hilfe von Neutralisationsmitteln in Wasser dispergiert. Sodann wird mit Wasser unter Rühren verdünnt. Es bildet sich zunächst eine Wasser-in-Öl-Emulsion aus, die bei weiterer Verdünnung in eine Öl-in-Wasser-Emulsion umschlägt. Dieser Punkt wird im allgemeinen bei Festkörpergehalten von <50 Gew.-%, bezogen auf die Emulsion, erreicht und ist äußerlich an einem stärkeren Abfall der Viskosität während der Verdünnung erkennbar.

Die Öl-in-Wasser-Emulsion kann auch direkt durch die Schmelzeemulgierung der Bindemittel und der Vernetzungsmittel sowie gegebenenfalls der Additive in Wasser hergestellt werden.

Die so erhaltene, noch lösemittelhaltige Emulsion wird anschließend durch azeotrope Destillation von Lösemitteln befreit.

Erfindungsgemäß ist es von Vorteil, wenn die zu entfernenden Lösemittel bei einer Destillationstemperatur unterhalb 70°C, bevorzugt unterhalb 50°C und insbesondere unterhalb 40°C abdestilliert werden. Gegebenenfalls wird der Destillationsdruck hierbei so gewählt, daß bei höhersiedenden Lösemitteln dieser Temperaturbereich eingehalten wird.

Im einfachsten Fall kann die azeotrope Destillation dadurch bewerkstelligt werden, daß man die Emulsion bei Raumtemperatur im offenen Gefäß während mehrerer Tage rührt. Im bevorzugten Fall wird die lösemittelhaltige Emulsion durch Vakuumdestillation von den Lösemitteln befreit.

Die abgedunstete oder abdestillierte Menge an Wasser und Lösemitteln werden zur Vermeidung von hohen Viskositäten durch Wasser ersetzt. Die Zugabe des Wassers kann vorher, nachher oder auch während des Abdunstens oder der Destillation durch portionsweise Zugabe erfolgen.

Nach Verlust der Lösemittel steigt die Glasübergangstemperatur T_{g} der dispergierten Teilchen an, und es bildet sich anstelle der bisherigen lösemittelhaltigen Emulsion (flüssig-in-flüssig-Dispersion) eine fest-in-flüssig-Dispersion, d.h. die erfindungsgemäße Slurry, aus.

Die Zugabe der Additive zu der wäßrigen Phase erfolgt bevorzugt nach dem strippen.

Die erfindungsgemäß zu verwendenden Salze können in unterschiedlicher Weise in die erfindungsgemäßen Slurries oder deren Vorstufen eingebracht werden. Beispielsweise können die Salze üblichen und bekannten Klarlack-Slurries zugesetzt werden, wodurch die erfindungsgemäßen Slurries resultieren. Sie können auch der organischen Lösung von Bestandteilen der erfindungsgemäßen Pulverslurry zugesetzt werden. Vorzugsweise werden sie vor dem Emulgieren der organischen Lösung im Wasser aufgelöst.

Gegebenenfalls werden die Partikel der erfindungsgemäßen Slurry im nassen Zustand mechanisch zerkleinert, was auch als Naßvermahlung bezeichnet wird. Vorzugsweise werden hierbei Bedingungen angewandt, daß die Temperatur des Mahlguts 70, bevorzugt 60 und insbesondere 50°C nicht überschreitet. Vorzugsweise beträgt der spezifische Energieeintrag während des Mahlprozesses 10 bis 1.000, bevorzugt 15 bis 750 und insbesondere 20 bis 500 Wh/g.

Für die Naßvermahlung können die unterschiedlichsten Vorrichtungen angewandt werden, die hohe oder niedrige Scherfelder erzeugen.

Beispiele geeigneter Vorrichtungen, die niedrige Scherfelder erzeugen, sind übliche und bekannte Rührkessel, Spalthomogenisatoren, Microfluidizer oder Dissolver.

Beispiele geeigneter Vorrichtungen, die hohe Scherfelder erzeugen, sind übliche und bekannte Rührwerksmühlen oder Inline-Dissolver.

Besonders bevorzugt werden die Vorrichtungen, die hohe Scherfelder erzeugen, angewandt. Von diesen sind die Rührwerksmühlen erfindungsgemäß besonders vorteilhaft und werden deshalb ganz besonders bevorzugt verwendet.

Generell wird bei der Naßvermahlung die erfindungsgemäße Slurry mit Hilfe geeigneter Vorrichtungen, wie Pumpen, den vorstehend beschriebenen Vorrichtungen zugeführt und im Kreis hierüber gefahren, bis die gewünschte Teilchengröße erreicht ist.

Die erfindungsgemäße Slurry weist vorteilhafterweise einen Festkörpergehalt von 10 bis 60 Gew.-%, insbesondere von 20 bis 50 Gew.-%, auf.

Vorzugsweise wird die erfindungsgemäße Slurry vor ihrer Verwendung filtriert. Hierfür werden die üblichen und bekannten Filtrationsvorrichtungen und Filter verwendet, wie sie auch für die Filtration der bekannten Klarlack-Slurries in Betracht kommen. Die Maschenweite der Filter kann breit variieren und richtet sich in erster Linie nach der Teilchengröße und der Teilchengrößenverteilung der Partikel der erfindungsgemäßen Slurry. Der Fachmann kann daher die geeigneten Filter leicht anhand dieses physikalischen Parameters ermitteln. Beispiele geeigneter Filter sind Beutelfilter. Diese sind am Markt unter den Marken Pong® oder Cuno® erhältlich. Vorzugsweise werden Beutelfilter mit den Maschenweiten 25 bis 50 µm verwendet, beispielsweise Pong® 25 bis Pong® 50.

Besonders vorteilhaft ist es, wenn die Reaktivität von (Wasser-)Basislack und der erfindungsgemäßen Slurry aufeinander abgestimmt sind, d.h. zwei gleiche Vernetzungsmechanismen aufweisen, dadurch ist eine Durchmischung von Basislack- und Slurry-Komponenten möglich, was zu einem verbesserten Eigenschaftsprofil der resultierenden Lackierung führt.
Die Temperaturdifferenz vom Onset der Vernetzungsreaktion darf in einer vorteilhaften Ausgestaltung der vorliegenden Erfindung nicht größer als 40°C, bevorzugt 30°C, besonders bevorzugt 25°C und insbesondere bevorzugt 20°C sein.
Die genannte Temperaturdifferenz bezieht sich hierbei auf den Unterschied zwischen der Vernetzungstemperatur des (Wasser-)Basislacks und der Vernetzungstemperatur der erfindungsgemäßen Slurry. Es ist dabei im erfindungsgemäßen Rahmen sowohl möglich, daß die Vernetzungstemperatur des Basislacks höher liegt als die der Slurry, aber auch, daß die Vernetzungstemperatur der Slurry höher liegt als die des Basislacks. Bevorzugt ist es, daß die Vernetzungstemperatur des Basislacks niedriger liegt als die der Slurry, der Basislack also reaktiver ist als die Slurry.

Zur Herstellung der erfindungsgemäßen Klarlackierungen wird die erfindungsgemäße Slurry auf das zu beschichtende Substrat appliziert. Hierbei brauchen keine besonderen Maßnahmen ergriffen zu werden, sondern die Applikation kann nach den üblichen und bekannten Verfahren erfolgen, was ein weiterer besonderer Vorteil der erfindungsgemäßen Slurry ist.

Nach ihrer Applikation trocknet die erfindungsgemäße Slurry problemlos auf und zeigt bei der Verarbeitungstemperatur, in der Regel bei Raumtemperatur, ein Verfilmen. D.h., die als Naßschicht applizierte erfindungsgemäße Slurry lüftet bei Raumtemperatur oder leicht erhöhten Temperaturen unter Wasserabgabe ab, wobei die darin enthaltenen Partikel ihre ursprüngliche Form verändern. Dadurch ist die Neigung zum "mud-cracking" ausgesprochen gering.

In dem nachfolgenden Einbrennschritt wird die nun weitgehend wasserfreie Pulverschicht geschmolzen und zur Vernetzung gebracht. In manchen Fällen kann es von Vorteil sein, den Verlaufsprozess und die Vernetzungsreaktion mit einem zeitlichen Versatz ablaufen zu lassen, indem ein Stufenheizprogramm oder eine sogenannte Aufheizrampe gefahren wird. Die für die vorliegenden Beispiele angemessene Vernetzungstemperatur liegt zwischen 120 und 160°C. Die entsprechende Einbrennzeit liegt zwischen 20 und 60 Minuten.

Im Falle der erfindungsgemäßen Dual-Cure-Slurry wird die thermische Härtung noch durch die Härtung mit aktinischer Strahlung ergänzt, wobei die üblichen und bekannten Strahlenquellen und Verfahren, wie sie beispielsweise in der deutschen Patentanmeldung DE 198 18 735 A1, Spalte 10, Zeile 31 bis Spalte 11, Zeile 22, beschrieben werden, angewandt werden können. Diese Verfahren und Vorrichtungen können auch für die Härtung der mit aktinischer Strahlung härtbaren erfindungsgemäßen Slurry angewandt werden.

Die hierbei resultierende Klarlackierung weist hervorragende anwendungstechnische Eigenschaften auf. So haftet sie fest auf allen üblichen und bekannten Basislackschichten oder auf Substraten wie Metall, Glas, Holz, Keramik, Stein, Beton oder Kunststoff. Sie ist von hohem Glanz, glatt, kratzfest, witterungsbeständig, chemikalienstabil und auch in hohem Schichtdicken frei von Störungen, wie Spannungsrisse oder Kocher. Bei Belastung mit Feuchtigkeit zeigt sie kein Weißanlaufen mehr. Darüber hinaus ist sie frei von Mikrostörungen und zeigt keine störenden optischen Effekte, wie etwa einen dem Metallic-Effekt ähnelnden Sternenhimmel.
Wegen dieses vorteilhaften Eigenschaftsprofils ist die erfindungsgemäße Slurry hervorragend für die Automobilerstlackierung, die Automobilreparaturlackierung, die Lackierung von Bauwerken im Innen- und Außenbereich, die Lackierung von Türen, Fenstern und Möbeln sowie die industrielle Lackierung, inklusive Coil Coating, Container Coating, die Lackierung von Kleinteilen, die Imprägnierung und/oder Beschichtung elektrotechnischer Bauteile oder die Lackierung von weißer Ware, geeignet. Hierbei wird sie vor allem zur Herstellung von Klarlackierungen im Rahmen von farb- und/oder effektgebenden Mehrschichtlackierungen verwendet, die nach den üblichen und bekannten Naß-in-naß-Verfahren aus Basislacken und der erfindungsgemäßen Slurry hergestellt werden.

Bei dem Naß-in-naß-Verfahren kann die erfindungsgemäße Slurry problemlos mit zahlreichen Basislacken, insbesondere Wasserbasislacken, kombiniert werden, ohne daß Probleme, wie Rißbildung, mangelnde Benetzbarkeit und schlechte Zwischenschichthaftung, auftreten.

Die erfindungsgemäße Slurry kann überraschenderweise auch als Klebstoff für die Herstellung von Klebschichten und als Dichtungsmasse für die Herstellung von Dichtungen, insbesondere auf den vorstehend genannten technischen Gebieten, eingesetzt werden.

### Beispiele und Vergleichsversuche

### Herstellbeispiel 1 (Vergleich)

### Die Herstellung eines Methacrylatcopolymerisats analog DE 101 35 999 A1

40,75 Gewichtsteile Methylethylketon wurden in einem Reaktionsgefäß, ausgerüstet mit Rührer, Rückflußkühler, Ölheizung, Stickstoffeinleitungsrohr und zwei Zulaufgefäßen, vorgelegt und auf 78°C aufgeheizt.

Hiernach wurde aus dem ersten Zulaufgefäß während 6,75 h eine Initiatorlösung aus 3 Gewichtsteilen Methylethylketon und 5 Gewichtsteilen TBPEH gleichmäßig zudosiert.

15 Minuten nach dem Beginn der Initiatordosierung wurde aus dem zweiten Zulaufgefäß eine Monomermischung aus 27,5 Gewichtsteilen n-Butylmethacrylat, 4,4 Gewichtsteilen i-Butylmethacrylat, 17,5 Gewichtsteilen Hydroxyethylmethacrylat und 0,6 Gewichtsteilen Methacrylsäure während 6 h bei 78°C gleichmäßig zudosiert. Anschließend wurde die Monomerleitung mit 0,25 Gewichtsteilen Methylethylketon und das Zulaufgefäß mit 0,5 Gewichtsteilen Methylethylketon gespült. Nach Beendigung des Initiatorzulaufs wurde das betreffende Zulaufgefäß ebenfalls mit 0,5 Gewichtsteilen Methylethylketon gespült.

Man ließ die Reaktionsmischung noch während 3 h bei 78°C nachreagieren. Anschließend wurden die flüchtigen Anteile durch Vakuumdestillation entfernt, bis ein Festkörpergehalt von 70 Gew.-% eingestellt war. Danach wurde die Harzlösung ausgetragen. Sie wies eine Viskosität von 17,0 bis 20,0 dPas auf (Festharz 60prozentig Xylol bei 23°C). Die Säurezahl lag bei 9,5 bis 11,5 und die Hydroxylzahl bei 150 mg KOH/g Festharz.

### Herstellbeispiel 2

### Die Herstellung eines blockierten Polyisocyanats auf der Basis von Isophorondiisocyanat

837 Gewichtsteile Isophorondiisocyanat wurden in einem geeigneten Reaktionsgefäß vorgelegt und mit 0,1 Gewichtsteilen Dibutylzinndilaurat versetzt. Sodann ließ man eine Lösung aus 168 Gewichtsteilen Trimethylolpropan und 431 Gewichtsteilen Methylethylketon langsam zulaufen. Durch die exotherme Reaktion stieg die Temperatur an. Nachdem 80°C erreicht waren, wurde die Temperatur durch äußere Kühlung konstant gehalten, und der Zulauf wurde gegebenenfalls leicht gedrosselt. Nach Ende des Zulaufs hielt man noch für ca. 1 Stunde auf dieser Temperatur, bis der Isocyanatgehalt des Festkörpers 15,7 % (bezogen auf NCO-Gruppen) erreicht hatte. Anschließend wurde das Reaktionsgemisch auf 40°C gekühlt, und es wurde eine Lösung von 362 Gewichtsteilen 3,5-Dimethylpyrazol in 155 Gewichtsteilen Methylethylketon innerhalb 30 Minuten zugegeben. Nachdem das Reaktionsgemisch sich durch die Exothermie auf 80°C erwärmt hatte, hielt man die Temperatur für 30 Minuten konstant, bis der NCO-Gehalt auf kleiner 0,1% abgesunken war. Sodann fügte man 47 Gewichtsteile n-Butanol zu der Reaktionsmischung hinzu, hielt für weitere 30 Minuten bei 80°C und trug sie nach kurzer Kühlung aus.

Das Reaktionsprodukt wies einen Festgehalt von 69,3% (1 h bei 130°C) auf.

### Herstellbeispiel 3

### Die Herstellung eines blockiertes Polyisocyanats auf der Basis von Hexamethylendiisocyanat

534 Gewichtsteile Desmodur® N 3300 (handelsübliches Isocyanurat von Hexamethylendiisocyanat der Firma Bayer AG) und 200 Gewichtsteile Methylethylketon wurden in einem Reaktionsgefäß vorgelegt und auf 40°C erhitzt. Zu der Lösung gab man unter Kühlung 100 Gewichtsteile 3,5-Dimethylpyrazol zu und wartete das Abklingen der exothermen Reaktion ab. Danach wurden bei fortgesetzter Kühlung erneut 100 Gewichtsteile 3,5-Dimethylpyrazol hinzugegeben. Nach erneutem Abklingen der exothermen Reaktion wurden weitere 66 Gewichtsteile 3,5-Dimethylpyrazol zugegeben. Danach wurde die Kühlung abgestellt, wodurch sich das Reaktionsgemisch langsam auf 80°C erwärmte. Man hielt es bei dieser Temperatur, bis sein Isocyanatgehalt auf unter 0,1% gesunken war. Danach wurde das Reaktionsgemisch gekühlt und ausgetragen.

Die resultierende Lösung des blockierten Polyisocyanats wies einen Festkörpergehalt von 81 Gew.-% (1h bei 130°C) und eine Viskosität von 3,4 dPas (70%-ig in Methylethylketon; Platte-Kegel-Viskosimeter bei 23°C) auf.

### Herstellbeispiel 4 (erfindungsgemäß)

### Die Herstellung eines erfindungsgemäß zu verwendenden Methacrylatcopolymerisats (Bindemittel)

40,75 Gewichtsteile Methylethylketon wurden in einem Reaktionsgefäß, ausgerüstet mit Rührer, Rückflußkühler, Ölheizung, Stickstoffeinleitungsrohr und zwei Zulaufgefäßen, vorgelegt und auf 78°C aufgeheizt.

Hiernach wurde aus dem ersten Zulaufgefäß während 6,75 h eine Initiatorlösung aus 3 Gewichtsteilen Methylethylketon und 5 Gewichtsteilen TBPEH gleichmäßig zudosiert.

15 Minuten nach dem Beginn der Initiatordosierung wurde aus dem zweiten Zulaufgefäß eine Monomermischung aus 27,5 Gewichtsteilen n-Butylmethacrylat, 1,65 Gewichtsteilen i-Butylmethacrylat, 20,25 Gewichtsteilen Hydroxyethylmethacrylat und 0,6 Gewichtsteilen Methacrylsäure während 6 h bei 78°C gleichmäßig zudosiert. Anschließend wurde die Monomerleitung mit 0,25 Gewichtsteilen Methylethylketon und das Zulaufgefäß mit 0,5 Gewichtsteilen Methylethylketon gespült. Nach Beendigung des Initiatorzulaufs wurde das betreffende Zulaufgefäß ebenfalls mit 0,5 Gewichtsteilen Methylethylketon gespült.

Man ließ die Reaktionsmischung noch während 3 h bei 78°C nachreagieren. Anschließend wurden die flüchtigen Anteile durch Vakuumdestillation entfernt, bis ein Festkörpergehalt von 70 Gew.-% eingestellt war. Danach wurde die Harzlösung ausgetragen. Sie wies eine Viskosität von 6,0 bis 8,0 dPas auf (Festharz 50prozentig Xylol bei 23°C). Die Säurezahl lag bei 9,5 bis 11,5 und die Hydroxylzahl bei 175 mg KOH/g Festharz.

### Beispiel 1

### Die Herstellung einer erfindungsgemäßen Slurry

In einem geeigneten Mischgefäß wurden 727,283 Gewichtsteile der Methacrylatcopolymerisatlösung gemäß Herstellbeispiel 4, 594,291 Gewichtsteile des blockierten Polyisocyanats des Herstellbeispiels 3, 23,666 Gewichtsteile Tinuvin® 400, 10,058 Gewichtsteile Tinuvin® 123 (handelsübliche Lichtschutzmittel der Firma Ciba Specialty Chemicals, Inc.) und 14,000 Gewichtsteile Lutensol AT50 und 3,872 Gewichtsteile Dimethylethanolamin vorgelegt und bei Raumtemperatur 30 Minuten gerührt.
Danach wurden 716,702 Gewichtsteile deionisiertes Wasser, in dem eine geringe Menge an Ammoniumacetat (etwa 0,03 Gew.-%) gelöst war, zugegeben und bei Raumtemperatur während 1 h gerührt.
Anschließend ließ man unter Kühlung 728,000 Gewichtsteile deionisiertes Wasser innerhalb von 30 Minuten zulaufen, wonach man die resultierende Mischung homogenisierte.

Nach dem Emulgieren wurden die flüchtigen Anteile der Emulsion bei max. 32°C unter Vakuum abdestilliert, bis ein Gehalt an Methylethylketon <0,2 Gew.-% und ein Festkörpergehalt (15 Minuten bei 180°C) von 35 bis 37 Gew.-% erreicht waren.

Anschließend wurden der resultierenden Slurry noch 1,0 Gewichtsteile Acrysol® RM-8 (handelsüblicher nicht ionischer Assoziatiwerdicker der Firma Rohm & Haas), 0,05% BYK 333 und 6% deionisiertes Wasser hinzugefügt.

### Beispiel 2

### Die Herstellung einer erfindungsgemäßen Slurry

In einem geeigneten Mischgefäß wurden 884,393 Gewichtsteile der Methacrylatcopolymerisatlösung gemäß Herstellbeispiel 4, 454,858 Gewichtsteile des blockierten Polyisocyanats des Herstellbeispiels 3, 23,782 Gewichtsteile Tinuvin® 400, 5,054 Gewichtsteile Tinuvin® 123 (handelsübliche Lichtschutzmittel der Firma Ciba Specialty Chemicals, Inc.) und 3,872 Gewichtsteile Dimethylethanolamin vorgelegt.
Dann wurden 703,913 Gewichtsteile deionisiertes Wasser, in dem eine geringe Menge an Ammoniumacetat (etwa 0,18 Gew.-%) gelöst war, zugegeben und bei Raumtemperatur für 30 Minuten gerührt. Anschließend ließ man unter Kühlung 728,000 Gewichtsteile deionisiertes Wasser innerhalb von 30 Minuten zulaufen, wonach man die resultierende Mischung homogenisierte.

Nach dem Emulgieren wurden die flüchtigen Anteile der Emulsion bei max. 32°C unter Vakuum abdestilliert, bis ein Gehalt an Methylethylketon <0,2 Gew.-% und ein Festkörpergehalt (15 Minuten bei 180°C) von 35 bis 37 Gew.-% erreicht waren.
Anschließend wurden der resultierenden Slurry noch 1,0 Gewichtsteile Acrysol® RM-8 (handelsüblicher nicht ionischer Assoziativverdicker der Firma Rohm & Haas) und 0,05% BYK 333 hinzugefügt.

### Vergleichsversuch V1

### Die Herstellung einer nicht erfindungsgemäßen Slurry

In einem geeigneten Mischgefäß wurden 24,943 Gewichtsteile der Methacrylatcopolymerisatlösung gemäß Herstellbeispiel 1, 12,495 Gewichtsteile des blockierten Polyisocyanats des Herstellbeispiels 3, 5,687 Gewichtsteile des blockierten Polyisocyanats des Herstellbeispiels 2, 0,744 Gewichtsteile Tinuvin® 400, 0,158 Gewichtsteile Tinuvin® 123 (handelsübliche Lichtschutzmittel der Firma Ciba Specialty Chemicals, Inc.), 0,131 Gewichtsteile Dimethylethanolamin, 0,44 Gewichtsteile Lutensol AT 50 sowie 0,025 Gewichtsteile Dibutylzinndilaurat vorgelegt und bei Raumtemperatur während 30 Minuten gerührt.
Anschließend ließ man unter Kühlung 24,71 Gewichtsteile deionisiertes Wasser, in dem eine geringe Menge an Ammoniumacetat (etwa 0,036 Gew.-%) gelöst war, innerhalb von 30 Minuten zulaufen, wonach man die resultierende Mischung ca. 1h homogenisierte.
Anschließend wurde die Dispersion mit 25,115 Gewichtsteilen deionisiertem Wasser verdünnt.

Nach dem Emulgieren wurden die flüchtigen Anteile der Emulsion bei max. 32°C unter Vakuum abdestilliert, bis ein Gehalt an Methylethylketon <0,2 Gew.-% und ein Festkörpergehalt (15 Minuten bei 180°C) von 35 bis 37 Gew.-% erreicht waren.

Anschließend wurden der resultierenden Slurry noch 1,8 Gewichtsteile Acrysol® RM-8 (handelsüblicher nicht ionischer Assoziatiwerdicker der Firma Rohm & Haas), 0,05% BYK 333 und 6% Wasser hinzugefügt.

### Beispiel 3

### Die Herstellung von Mehrschichtlackierung mit den erfindungsgemäßen Klarlackierungen

Zur Applikation der erfindungsgemäßen Slurry 1 des Beispiels 1 und der erfindungsgemäßen Slurry 2 des Beispiels 2 wurden sogenannte integrierte Aufbauten mit einem schwarzen Basislack vorbereitet.

Hierzu wurde auf mit handelsüblichem Elektrotauchlack kathodisch beschichteten Stahltafeln mit einer Becherpistole zunächst ein silbermetallic Basislack appliziert, 4-Minuten bei Raumtemperatur abgelüftet und anschließend für 5 min bei 80°C vorgetrocknet.

Nach Abkühlen der Tafeln wurden in gleicher Weise die erfindungsgemäße Slurry 1 und die erfindungsgemäße Slurry 2 appliziert. Hiernach ließ man die Tafeln zunächst 2 min ablüften und anschließend 15 min lang bei 40°C vortrocknen. Dann wurden sie während 30 min bei 150°C eingebrannt.

Die applizierten Naßschichten waren so gewählt, daß nach dem Einbrennen die Trockenschichtdicken für den Wasserbasislack jeweils bei 10 µm lagen. Die erfindungsgemäße Klarlackierung 1 und die erfindungsgemäße Klarlackierung 2 hatten jeweils eine Schichtdicke von 20 bis 35 µm.

Anschließend wurde die gleiche Applikation von Basislack und Klarlackierung auf die ungeschliffene Erstlackierung noch einmal durchgeführt, um die Reparaturlackierung zu simulieren.

Die erfindungsgemäßen Klarlackierungen waren hart, kratzfest, klar, brillant, chemikalien-, witterungs- und schwitzwasserbeständig sowie frei von Mikrostörungen, die einen dem Metallic-Effekt ähnlichen optischen Effekt (Sternenhimmel) hervorrufen.
Ebenso wiesen die erfindungsgemäßen Lackierungen eine hervorragende Haftung zu der ersten Lackierungsschicht auf.
Gitterschnittest: 0-1
Steinschlagtest: 2,0

### Vergleichsversuch V2

### Die Herstellung einer Mehrschichtlackierung mit einer nicht erfindungsgemäßen Klarlackierung

Beispiel 3 wurde wiederholt, nur daß die nicht erfindungsgemäße Slurry des Vergleichsversuchs V1 verwendet wurde.

Die resultierende nicht erfindungsgemäße Klarlackierung war hart, kratzfest, klar, brillant, chemikalien-, witterungs- und schwitzwasserbeständig.
Allerdings hatte die Klarlackierung des Vergleichsversuchs V1 eine schlechtere Haftung zur ersten Lackierungsschicht.
Sowohl im Steinschlagtest, als auch im Gitterschnittest erfolgte nahezu komplette Delamination.

Die Beurteilung der Testtafeln erfolgte nach folgenden Kriterien:
1. Steinschlagprüfung SAEJ 400 (VDA Kugelschuß) (vgl. auch Römpp Lexikon Lacke und Druckfarben, Georg Thieme Verlag, Stuttgart, New York, "Steinschlagtest", Seite 540); die Steinschlagtrefferfläche wurde mit Tesaband abgeklebt, das Band wurde fest angedrückt und dann ruckartig jeweils einmal nach rechts, links, oben und unten abgerissen.
   Ergebniseinschätzung: Noten von 1,0 bis 5, wobei 5 komplette Delamination bedeutet.
2. Gitterschitt (2mm): Der Gitterschnittbereich wurde mit Tesaband abgeklebt, das Band wurde fest angedrückt und dann ruckartig zum Körper des Testers hin abgezogen.
   Ergebniseinschätzung: Skala von 0 bis 5, wobei bei 0 überhaupt nichts abgerissen bedeutet und 5 komplette Delamination bedeutet.

## Patentansprüche

1. Strukturviskose Klarlack-Slurry, enthaltend feste und/oder hochviskose, unter Lagerungs- und Anwendungsbedingungen dimensionsstabile Partikel, die 0 bis 0,07 Gew.-% Katalysatoren, bezogen auf den Gesamtfestkörper der Slurry, und als Bindemittel Methacrylatcopolymerisate mit einer OH-Zahl von >150 enthalten, die, bezogen auf ein gegebenes Methacrylatcopolymerisat, mindestens 90 Gew.-% Methacrylatcomonomere, inklusive potentiell ionische Gruppen aufweisende (Meth)Acrylatcomonomere, einpolymerisiert enthalten.

2. Strukturviskose Klarlack-Slurry nach Anspruch 1, **dadurch gekennzeichnet, daß** sie Methacrylatcopolymerisate mit einer OH-Zahl von >170 enthält.

3. Strukturviskose Klarlack-Slurry nach Anspruch 1 oder 2, **dadurch gekennzeichnet, daß** sie 0,001 bis 0,06 Gew.-%, bezogen auf den Gesamtfestkörper der Slurry, Katalysator enthält.

4. Strukturviskose Klarlack-Slurry nach einem der Ansprüche 1 bis 3, **dadurch gekennzeichnet, daß** sie als Verlaufmittel alkylierte Polysiloxane, bevorzugt polyethermodifizierte Methylalkylpolysiloxane, besonders bevorzugt polyethermodifiziertes Polydimethylsiloxan, enthält.

5. Strukturviskose Klarlack-Slurry nach Anspruch 4, **dadurch gekennzeichnet, daß** sie 0,01 bis 1 Gew.-%, bezogen auf den Gesamtfestkörper der Slurry, der genannten Verlaufmittel enthält.

6. Strukturviskose Klarlack-Slurry nach einem der Ansprüche 1 bis 5, **dadurch gekennzeichnet, daß** sie mit Dimethylpyrazol verkappte Isocyanate enthält.

7. Strukturviskose Klarlack-Slurry nach einem der Ansprüche 1 bis 6, **dadurch gekennzeichnet, daß** sie zusätzlich Melaminharze enthält.

8. Verfahren zur Herstellung der strukturviskosen Klarlack-Slurry nach einem der Ansprüche 1 bis 7, **dadurch gekennzeichnet, daß** sie durch
1) Emulgieren einer organischen Lösung von Bestandteilen der Klarlack-Slurry in Wasser, wodurch eine Emulsion vom Typ Öl-in-Wasser resultiert,
2) Entfernen des organischen Lösemittels oder der organische Lösemittel und
3) teilweisen oder völligen Ersatz des entfernten Lösemittelvolumens durch Wasser
herstellbar ist.

9. Verwendung der Klarlack-Slurry gemäß einem der Ansprüche 1 bis 7, für die Automobilerstlackierung, die Automobilreparaturlackierung, die Lackierung von Bauwerken im Innen- und Außenbereich, die Lackierung von Türen, Fenstern und Möbeln sowie die industrielle Lackierung, inklusive Coil Coating, Container Coating, die Kleinteilelackierung, die Imprägnierung und/oder Beschichtung elektrotechnischer Bauteile und die Lackierung von weißer Ware.

10. Verwendung nach Anspruch 9, **dadurch gekennzeichnet, daß** die Klarlack-Slurry zur Herstellung von Klarlackierungen im Rahmen von farb- und/oder effektgebenden Mehrschichtlackierungen verwendet wird.

11. Verwendung der Klarlack-Slurry gemäß einem der Ansprüche 1 bis 7 als Klebstoff oder Dichtungsmasse zur Herstellung von Klebschichten und Dichtungen.

12. Mehrschichtlackierung aus Wasserbasislack und strukturviskose Klarlack-Slurry, **dadurch gekennzeichnet, daß** die Temperaturdifferenz vom Onset der Vernetzungsreaktionen von Basislack und Slurry nicht größer als 40°C ist, wobei die strukturviskose Klarlack-Slurry feste und/oder hochviskose, unter Lagerungs- und Anwendungsbedingungen dimensionsstabile Partikel, die 0 bis 0,07 Gew.-% Katalysatoren, bezogen auf den Gesamtfestkörper der Slurry und als Bindemittel Methacrylatcopolymerisate mit einer OH-Zahl von >150 enthalten, die, bezogen auf ein gegebenes Methacrylatcopolymerisat, mindestens 90 Gew.-% Methacrylatcomonomere, inklusive potentiell ionische Gruppen aufweisende (Meth)Acrylatcomonomere, einpolymerisiert enthalten, enthält.

13. Verwendung der Mehrschichtlackierung gemäß Anspruch 12 für die Automobilerstlackierung, die Automobilreparaturlackierung, die Lackierung von Bauwerken im Innen- und Außenbereich, die Lakkierung von Türen, Fenstern und Möbeln sowie die industrielle Lakkierung, inklusive Coil Coating, Container Coating, die Kleinteilelakkierung, die Imprägnierung und/oder Beschichtung elektrotechnischer Bauteile und die Lackierung von weißer Ware.

## Claims

1. Pseudoplastic clearcoat slurry comprising solid and/or highly viscous particles which are dimensionally stable under storage and application conditions and comprise from 0 to 0.07% by weight of catalysts, based on the overall solids of the slurry, and, as binders, methacrylate copolymers having an OH number of >150, which, based on a given methacrylate copolymer, contain in copolymerized form at least 90% by weight of methacrylate comonomers, including (meth)acrylate comonomers containing potentially ionic groups.

2. Pseudoplastic clearcoat slurry according to claim 1, comprising methacrylate copolymers having an OH number of >170.

3. Pseudoplastic clearcoat slurry according to claim 1 or 2, containing from 0.001 to 0.06% by weight, based on the overall solids of the slurry, of catalyst.

4. Pseudoplastic clearcoat slurry according to any of claims 1 to 3, comprising as leveling agents alkylated polysiloxanes, preferably polyether-modified methylalkylpolysiloxanes, with particular preference polyether-modified polydimethylsiloxane.

5. Pseudoplastic clearcoat slurry according to claim 4, containing from 0.01 to 1% by weight, based on the overall solids of the slurry, of said leveling agents.

6. Pseudoplastic clearcoat slurry according to any of claims 1 to 5, comprising dimethylpyrazole-capped isocyanates.

7. Pseudoplastic clearcoat slurry according to any of claims 1 to 6, further comprising melamine resins.

8. Process for preparing the pseudoplastic clearcoat slurry according to any of claims 1 to 7, preparable by
1) emulsifying an organic solution of constituents of the clearcoat slurry in water to give an emulsion of the oil-in-water type,
2) removing the organic solvent or the organic solvents, and
3) replacing by water some or all of the volume of solvent removed.

9. Use of the clearcoat slurry according to any of claims 1 to 7 for automotive OEM finishing, automotive refinish, the interior and exterior painting of buildings, the coating of doors, windows and furniture, and also for industrial coating, including coil coating, container coating, the coating of small parts, the impregnation and/or coating of electrical components, and the coating of white goods.

10. Use according to claim 9, **characterized in that** the clearcoat slurry is used to produce clearcoats as a part of multicoat color and/or effect paint systems.

11. Use of the clearcoat slurry according to any of claims 1 to 7 as an adhesive or sealing compound for producing adhesive films and seals.

12. Multicoat paint system comprising aqueous basecoat material and pseudoplastic clearcoat slurry, **characterized in that** the temperature difference of the onset of the crosslinking reactions of basecoat material and slurry is not greater than 40°C, the pseudoplastic clearcoat slurry comprising solid and/or highly viscous particles which are dimensionally stable under storage and application conditions and comprise from 0 to 0.07% by weight of catalysts, based on the overall solids of the slurry, and, as binders, methacrylate copolymers having an OH number of >150, which, based on a given methacrylate copolymer, contain in copolymerized form at least 90% by weight of methacrylate comonomers, including (meth)acrylate comonomers containing potentially ionic groups.

13. Use of the multicoat paint system according to claim 12 for automotive OEM finishing, automotive refinish, the interior and exterior painting of buildings, the coating of doors, windows and furniture, and also for industrial coating, including coil coating, container coating, the coating of small parts, the impregnation and/or coating of electrical components, and the coating of white goods.

## Revendications

1. Suspension de vernis à viscosité inhérente, contenant des particules solides et/ou hautement visqueuses à stabilité dimensionnelle dans les conditions de stockage et d'utilisation, qui contiennent de 0 à 0,07 % de catalyseurs, par rapport à la matière solide totale de la suspension, et en tant que liant des copolymères de méthacrylate ayant un indice de groupes OH de >150, qui contiennent incorporés par polymérisation, par rapport à un copolymère de méthacrylate donné, au moins 90 % en poids de comonomères méthacrylate, y compris des comonomères (méth)acrylate comportant des groupes potentiellement ioniques.

2. Suspension de vernis à viscosité inhérente selon la revendication 1, **caractérisée en ce qu'**elle contient des copolymères de méthacrylate ayant un indice de groupes OH de >170.

3. Suspension de vernis à viscosité inhérente selon la revendication 1 ou 2, **caractérisée en ce qu'**elle contient de 0,001 à 0,06 % en poids, par rapport à la matière solide totale de la suspension, de catalyseur.

4. Suspension de vernis à viscosité inhérente selon l'une quelconque des revendications 1 à 3, **caractérisée en ce qu'**elle contient en tant qu'agent d'étalement des polysiloxanes alkylés, de préférence des méthylalkylpolysiloxanes modifiés par des polyéthers, de façon particulièrement préférée un polydiméthylsiloxane modifié par un polyéther.

5. Suspension de vernis à viscosité inhérente selon la revendication 4, **caractérisée en ce qu'**elle contient de 0,01 à 1 % en poids, par rapport à la matière solide totale de la suspension, des agents d'étalement cités.

6. Suspension de vernis à viscosité inhérente selon l'une quelconque des revendications 1 à 5, **caractérisée en ce qu'**elle contient des isocyanates coiffés avec du diméthylpyrazole.

7. Suspension de vernis à viscosité inhérente selon l'une quelconque des revendications 1 à 6, **caractérisée en ce qu'**elle contient en outre des résines mélamine.

8. Procédé pour la préparation de la suspension de vernis à viscosité inhérente selon l'une quelconque des revendications 1 à 7, **caractérisé en ce qu'**elle peut être préparée par
1) émulsification d'une solution organique de composants de la suspension de vernis dans de l'eau, de sorte qu'il en résulte une émulsion du type huile-dans-eau,
2) élimination du solvant organique ou des solvants organiques et
3) remplacement partiel ou total du volume du(des) solvant(s) éliminé(s) par de l'eau.

9. Utilisation de la suspension de vernis selon l'une quelconque des revendications 1 à 7, pour la première mise en peinture d'automobiles, le peinturage de réparation d'automobiles, le peinturage de bâtiments à l'intérieur et à l'extérieur, le peinturage de portes, fenêtres et meubles ainsi que le peinturage industriel, y compris le peinturage de rubans continus (*coil coating*), le peinturage de récipients (*container coating*), le peinturage de petites pièces, l'imprégnation et/ou le revêtement de composants électroniques et le laquage d'appareils électroménagers.

10. Utilisation selon la revendication 9, **caractérisée en ce que** la suspension de vernis est utilisée pour la production de revêtements de vernis dans le cadre de revêtements de peinture multicouches colorants et/ou à effet.

11. Utilisation de la suspension de vernis selon l'une quelconque des revendications 1 à 7, en tant qu'adhésif ou matériau d'étanchéité, pour la production de couches d'adhésif et d'étanchéités.

12. Revêtement de peinture multicouche à base de peinture de fond à l'eau et de suspension de vernis à viscosité inhérente, **caractérisé en ce que** la différence de température du début des réactions de réticulation de la peinture de fond et de la suspension n'excède pas 40 °C, la suspension de vernis à viscosité inhérente contenant des particules solides et/ou hautement visqueuses, à stabilité dimensionnelle dans les conditions de stockage et d'utilisation, qui contiennent de 0 à 0,07 % de catalyseurs, par rapport à la matière solide totale de la suspension, et en tant que liant des copolymères de méthacrylate ayant un indice de groupes OH de >150, qui contiennent incorporés par polymérisation, par rapport à un copolymère de méthacrylate donné, au moins 90 % en poids de comonomères méthacrylate, y compris des comonomères (méth)acrylate comportant des groupes potentiellement ioniques.

13. Utilisation du revêtement de peinture multicouche selon la revendication 12, pour la première mise en peinture d'automobiles, le peinturage de réparation d'automobiles, le peinturage de bâtiments à l'intérieur et à l'extérieur, le peinturage de portes, fenêtres et meubles ainsi que le peinturage industriel, y compris le peinturage de rubans continus (*coil coating*), le peinturage de récipients (*container coating*), le peinturage de petites pièces, l'imprégnation et/ou le revêtement de composants électroniques et le laquage d'appareils électroménagers.
